# EUROPÄISCHE PATENTSCHRIFT

(11) **EP 3 137 204 B1**
(45) Veröffentlichungstag und Bekanntmachung des Hinweises auf die Patenterteilung: **02.08.2023**
(21) Anmeldenummer: 15721629.2
(22) Anmeldetag: 29.04.2015
(51) Int. Cl.: B01F 27/805, B01F 33/84, G06Q 10/08, B01F 35/88, B01F 101/22, G06Q 10/0875

(54) **APOTHEKEN-REZEPTURHERSTELLUNGSSYSTEM UND APOTHEKEN-REZEPTURHERSTELLUNGSVERFAHREN ZUM HERSTELLEN VON PHARMAZEUTISCHEN INDIVIDUALREZEPTUREN**
SYSTEM AND METHOD FOR MANUFACTURING PHARMACY-COMPOSITIONS FOR INDIVIDUAL PHARMACEUTICAL RECIPES
SYSTEME ET PROCÉDÉ POUR PRÉPARER DES COMPOSITIONS DE PHARMACIE POUR LES ORDONNANCES INDIVIDUELLES

(30) Priorität: 29.04.2014 DE 102014105989
(43) Veröffentlichungstag der Anmeldung: 08.03.2017
(73) Patentinhaber: Gako Deutschland GmbH, 96110 Schesslitz (DE)
(72) Erfinder: KONIETZKO, Matthias, 96049 Bamberg (DE)
(74) Vertreter: Schmitt-Nilson Schraud Waibel Wohlfrom Patentanwälte Partnerschaft mbB
(86) Internationale Anmeldenummer: PCT/EP2015/059304
(87) Internationale Veröffentlichungsnummer: WO 2015/165943

(56) Entgegenhaltungen:
- WO-A1-02/073142
- WO-A1-2011/036098
- WO-A2-2012/112497
- US-A1- 2002 035 412

## Beschreibung

Die vorliegende Erfindung betrifft ein Apotheken-Rezepturherstellungssystem und ein Apotheken-Rezepturherstellungsverfahren zum Herstellen von pharmazeutischen Individualrezepturen.

Derzeit werden pharmazeutische Individualrezepturen durch Apotheker häufig manuell hergestellt. Dies hat zur Folge, dass die Herstellung solcher Individualrezepturen fehlerbehaftet und langwierig ist und fehlende Rohstoffe, die zur Herstellung einer solchen Individualrezeptur erforderlich sind, erst verzögert erkannt werden. Zudem kommt es vor, dass sich die tatsächlich hergestellte Individualrezeptur von der vorgegebenen Rezeptur unterscheidet.

Die WO 02/073142 A1 zeigt eine Vorrichtung zum Mischen von Substanzen, insbesondere von Farbstoffen, mit einer Prozessoreinheit, einer zur Speicherung von Mischformeln dienenden lokalen Speichereinheit, einer Anzeigeeinheit und einer Eingabeeinheit, sowie mit einer Messvorrichtung, gegebenenfalls einer Waage, mittels der Anteile von Substanzen in entsprechend einer Mischformel festgelegten Mengen manuell oder automatisch in einen Behälter einfüllbar sind, dadurch gekennzeichnet, dass die Prozessoreinheit mit einem Kommunikationsmodul verbunden ist, mit dem drahtlos eine Kommunikationsverbindung zu einem Datenserver erstellbar ist, über die Daten von Mischformeln zur lokalen Speichereinheit übertragbar sind.

Es ist daher eine Aufgabe der vorliegenden Erfindung, ein effizienteres System und Verfahren zum Herstellen von pharmazeutischen Individualrezepturen, wie Rezepturen für Salben, halbfeste Zubereitungen, Augentropfen, Tinkturen, Tabletten, Kapseln oder Tees, in Mengen bis 5 kg bereitzustellen, mit dem Verzögerungen und Fehler bei der Herstellung weitestgehend vermieden werden.

Diese Aufgabe wird durch den Gegenstand der unabhängigen Ansprüche 1 und 6 gelöst. Vorteilhafte Weiterbildungen ergeben sich aus den abhängigen Ansprüchen.

Ein erfindungsgemäßes Apotheken-Rezepturherstellungssystem gemäß Anspruch 1 zum Herstellen von pharmazeutischen Individualrezepturen, nämlich Rezepturen für Salben, halbfeste Zubereitungen, Augentropfen, Tinkturen, Tabletten, Kapseln oder Tees, in Mengen bis 5 kg, umfasst eine Einleseeinrichtung zum Einlesen von Individualrezeptdaten eines Individualrezepts; eine Wägeeinrichtung zum Abwiegen der Mengen der für ein eingelesenes Individualrezept erforderlichen Rohstoffe; eine Mischeinrichtung, insbesondere ein Rührer mit Antrieb und ein Mischgefäß; eine Anzeigeeinrichtung; einen apothekenbezogenen Bestands-Datenbankbereich, der Rohstoffidentifikations-Parameter der in der Apotheke verfügbaren pharmazeutischen Rohstoffe, sowie für wenigstens einen Rohstoffidentifikations-Parameter einen zugeordneten Rohstoffmengen-Parameter aufweist, und der Verarbeitungsgerätidentifikations--Parameter der in der Apotheke verfügbaren Verarbeitungsgeräte aufweist; eine Herstellungs-Datenbank, die Zusammensetzungsinformationen, die einer Vielzahl von Individualrezepturen die jeweils enthaltenen Rohstoffe sowie deren Mengenverhältnisse zuordnet, sowie Herstellungsinformationen aufweist, die für jede enthaltene Individualrezeptur Herstellungsinformationen, wie Verarbeitungsgeräte, Zeitdauer und Vorgangs-Parameter der zu mischenden Rohstoffe beinhalten; und eine Datenverarbeitungseinheit, die so ausgebildet ist, dass sie Zugriff auf Daten des apothekenbezogenen Bestands-Datenbankbereichs hat; dass sie Zugriff auf Daten der Herstellungs-Datenbank hat; und dass für die eingelesenen Individualrezeptdaten eines Individualrezepts unter Zugriff auf die Herstellungs-Datenbank die zu der Herstellung des Individualrezepts erforderlichen Rohstoffe und deren Mengen sowie die Zeitdauer, die Verarbeitungsgeräte und die Vorgangs-Parameter des Mischvorgangs ermittelbar sind; dass unter Zugriff auf den apothekenbezogenen Bestands-Datenbankbereich durch einen Vergleich der zur Herstellung erforderlichen Rohstoffe und deren Mengen mit den verfügbaren Rohstoffen ermittelbar ist, ob das Individualrezept herstellbar ist, und dass, wenn das Individualrezept herstellbar ist, Verarbeitungshinweise zur Herstellung der Individualrezeptur an einen Benutzer ausgebbar sind, die Informationen über die erforderlichen Rohstoffe, deren Mengen, die erforderlichen Verarbeitungsgeräte, sowie die Zeitdauer und die Vorgangs-Parameter des Mischvorgangs beinhalten.

In dem breitesten Aspekt umfasst ein erfindungsgemäßes Apotheken-Rezepturherstellungssystem gemäß Anspruch 6 zum Herstellen von pharmazeutischen Individualrezepturen, wie Rezepturen für Salben, halbfeste Zubereitungen, Augentropfen, Tinkturen, Tabletten, Kapseln oder Tees, in Mengen bis 5 kg: eine Einleseeinrichtung zum Einlesen von Individualrezeptdaten eines Individualrezeptes, eine Wägeeinrichtung zum Abwiegen der Mengen der für ein eingelesenes Individualrezept erforderlichen Rohstoffe, eine Wägeeinrichtung zum Abwiegen der Mengen der für ein eingelesenes Individualrezept erforderlichen Rohstoffe, eine Mischeinrichtung, insbesondere ein Rührer mit Antrieb und ein Mischgefäß, eine Anzeigeeinrichtung, eine Datenverarbeitungseinheit, die so ausgebildet ist, dass sie Zugriff auf Daten eines apothekenbezogenen Bestands-Datenbankbereichs hat, der Rohstoffidentifikations-Parameter der in der Apotheke verfügbaren pharmazeutischen Rohstoffe, sowie für wenigstens einen Rohstoffidentifikations-Parameter einen zugeordneten Rohstoffmengen-Parameter aufweist, und der Verarbeitungsgerätidentifikations-Parameter der in der Apotheke verfügbaren Verarbeitungsgeräte aufweist, dass sie Zugriff auf Daten einer Herstellungs-Datenbank hat, die Zusammensetzungs-Informationen, die einer Vielzahl von Individualrezepturen die jeweils enthaltenen Rohstoffe sowie deren Mengenverhältnisse zuordnet, sowie Herstellungsinformationen aufweist, die für jede enthaltene Individualrezeptur Herstellungs-Informationen, wie Verarbeitungsgeräte, Zeitdauer und Vorgangs-Parameter der zu mischenden Rohstoffe beinhalten, dass für die eingelesenen Individualrezeptdaten eines Individualrezepts unter Zugriff auf die Herstellungs-Datenbank die zu der Herstellung des Individualrezepts erforderlichen Rohstoffe und deren Mengen sowie die Zeitdauer, die Verarbeitungsgeräte und die Vorgangs-Parameter des Mischvorgangs ermittelbar sind, dass unter Zugriff auf den apothekenbezogenen Bestands-Datenbankbereich durch einen Vergleich der zur Herstellung erforderlichen Rohstoffe und deren Mengen mit den verfügbaren Rohstoffen ermittelbar ist, ob das Individualrezept herstellbar ist, und dass, wenn das Individualrezept herstellbar ist, Verarbeitungshinweise zur Herstellung der Individualrezeptur an einen Benutzer ausgebbar sind, die Informationen über die erforderlichen Rohstoffe, deren Mengen, die erforderlichen Verarbeitungsgeräte, sowie die Zeitdauer und die Vorgangs-Parameter des Mischvorgangs beinhalten. Der apothekenbezogene Bestands-Datenbankbereich und die Herstellungs-Datenbank sind bei diesem breitesten Aspekt der Erfindung nicht Bestandteil des Apotheken-Rezepturherstellungssystems, die Datenverarbeitungseinheit des Apotheken-Rezepturherstellungssystems greift nur auf diese zu.

Die Apothekenlandschaft in Deutschland und anderen europäischen Ländern ist sehr heterogen, z. B. ist es Personen in Deutschland nur erlaubt, maximal 3 Apotheken zu führen. Die Herstellung von Individualrezepturen erfolgt daher weitestgehend manuell unter Verwendung des Fachwissens der Apotheker, welches sich von Apotheker zu Apotheker und von Apotheke zu Apotheke unterscheiden kann. Zudem schlagen die Apotheker häufig in den Ihnen jeweils zur Verfügung stehenden Nachschlagewerken nach.

Gemäß einer der Erfindung zugrundeliegenden Erkenntnis wurde aufgrund der Tatsache, dass jede Apotheke Individualrezepturen bislang nach ihrem eigenen System gemischt hat, der Bedarf nach einen verbesserten und einheitlichen System bisher nicht erkannt. Diesen Bedarf haben die Erfinder des Gegenstands der vorliegenden Patentanmeldung erkannt, und die vorliegende Erfindung schafft eine wesentliche Verbesserung.

Gemäß einem Grundgedanken der Erfindung stehen dem Apotheker alle für die Herstellung von Individualrezepturen erforderlichen Informationen automatisch aus einem apothekenbezogenen Bestandsdatenbankbereich und aus einer Herstellungs-Datenbank zur Verfügung. In dem apothekenbezogenen Bestandsdatenbankbereich sind Daten bereitgehalten, welche die in der Apotheke verfügbaren Rohstoffe und Verarbeitungsgeräte wiederspiegeln. In der Herstellungs-Datenbank sind die Zusammensetzungsinformationen und die Herstellungsinformationen hinterlegt. Bei der Herstellungs-Datenbank handelt es sich um eine Wissensdatenbank, die dem Apotheker Information zur Zusammensetzung und Herstellung der herzustellenden Individualrezepturen liefert.

Die Daten des apothekenbezogenen Bestands-Datenbankbereichs können in Datensätzen vorliegen, wobei für jeden vorhandenen Rohstoff ein Rohstoff-Datensatz vorhanden sein kann, der jeweils einen Rohstoffidentifikations-Parameter, einen Rohstoffmengen-Parameter, optional noch die Bezeichnung des Rohstoffes und noch ein Haltbarkeitsdatum umfasst, und wobei für jedes vorhandene Verarbeitungsgerät ein Verarbeitungsgerät-Datensatz vorhanden sein kann, der jeweils einen Verarbeitungsgerätidentifikations-Parameter und optional noch die Bezeichnung des Verarbeitungsgeräts aufweist.

Die Daten der Herstellungs-Datenbank können in Datensätzen vorliegen, wobei für jede vorhandene Individualrezeptur ein Datensatz vorhanden sein kann, der jeweils die Zusammensetzungsinformationen, insbesondere die jeweils enthaltenen Rohstoffe sowie deren Mengenverhältnisse, die Herstellungsinformationen, wie Verarbeitungsgeräte, Zeitdauer und Vorgangs-Parameter der zu mischenden Rohstoffe, und optional Zusatzinformationen für eine Plausibilitätsprüfung, z. B. Unverträglichkeiten und weitere Verarbeitungshinweise beinhaltet.

Das erfindungsgemäße Apotheken-Rezepturherstellungssystem liefert eine gleichbleibende reproduzierbare Qualität bei der Herstellung der Individualrezeptur. Unterschiede bei der Herstellung der Individualrezepturen aufgrund von Unterschieden im Wissensstand einzelner Apotheker werden zuverlässig vermieden.

Bei solchen erfindungsgemäß gefertigten pharmazeutischen Individualrezepturen kann es sich um Rezepturen für Salben, halbfeste Zubereitungen, Augentropfen, Tinkturen, Tabletten, Kapseln oder Tees handeln. Diese werden in apothekentypischen Mengen von bis zu 5 kg, vorzugsweise bis 1 kg, hergestellt.

Mit einem erfindungsgemäßen Apotheken-Rezepturherstellungssystem ist eine voll automatisierbare Herstellung von pharmazeutischen Individualrezepturen, beginnend mit der Entgegennahme der Individualrezepts von einem Apotheker bzw. Anwender bis zur Abgabe der Individualrezeptur an den Kunden oder Verwender möglich.

Durch den Zugriff der Datenverarbeitungseinheit auf Daten in dem apothekenbezogenen Bestandsdatenbankbereich stehen der Datenverarbeitungseinheit stets die aktuellen Informationen über die in der Apotheke vorhandenen Rohstoffe und Verarbeitungsgeräte bereit.

Durch den Zugriff der Datenverarbeitungseinheit auf Daten in der Herstellungs-Datenbank ist gewährleistet, dass der Apotheker auf eine Vielzahl bereits überprüfter Individualrezepte zurückgreifen kann. Die benötigten Rohstoffe und deren Mengen sowie Zeitdauer, Verarbeitungsgeräte und Vorgangsparameter des Mischvorgangs können schnell und automatisch ermittelt werden. Dadurch ist es möglich, die Individualrezeptur in einer kürzeren Zeit herzustellen und somit dem Verwender die Individualrezeptur schon kurz nach Entgegennahme des Individualrezepts zur Verfügung zu stellen.

Dies entlastet den Apotheker, vermeidet das Angewiesensein auf das Fachwissen des Apotheker und erspart dem Apotheker das manuelle Nachschlagen.

Durch das insbesondere zentrale Bereithalten der Daten in der Herstellungs-Datenbank wird ein Qualitätsstandard geschaffen, sodass von jeder Apotheke auf die gleichen Daten zugegriffen wird, und somit Individualrezepturen an vielen Orten mit der gleichen Qualität hergestellt werden können.

Zudem kann schneller und zuverlässiger als bisher eine Aussage darüber getroffen werden, ob eine Individualrezeptur unmittelbar hergestellt werden kann oder hierfür benötigte Rohstoffe oder Verarbeitungsgeräte fehlen und nachbestellt werden müssen. Der Zeitpunkt, wann die Individualrezeptur fertiggestellt werden kann, kann sehr schnell und genau angegeben werden.

Zudem kann zum Zeitpunkt der Herstellung einer Individualrezeptur dokumentiert werden, dass diese nach den aktuell gültigen Richtlinien hergestellt wird, und Reklamationen oder Beanstandungen können vermieden werden.

Wenn die Daten in dem apothekenbezogenen Bestandsdatenbankbereich und in der Herstellungs-Datenbank stets aktuell gehalten werden, wird zuverlässig vermieden, dass veraltete Rezepturen oder veraltete Rohstoffe verwendet werden.

Die Einleseeinrichtung kann ausgebildet sein als visuelle Einleseeinrichtung, wie Scanner, wie ein Barcodescanner oder ein Scanner mit automatischer Schrifterkennung, oder wie eine Kamera mit automatischer Schrifterkennung, als manuelle Einleseeinrichtung, wie eine Tastatur, ein Touchscreen oder eine Maus, oder als akustische Einleseeinrichtung, wie ein Mikrofon mit Spracherkennung.

Durch Verwenden einer automatischen Einleseeinrichtung, wie einer visuellen Einleseeinrichtung können menschliche Eingabefehler in das System vermieden werden. Dadurch ist gewährleistet, dass die hergestellte Individualrezepturen dem Individualrezept entspricht.

Durch die Wägeeinrichtung wird das Abwiegen der Mengen der erforderlichen Rohstoffe ermöglicht, sodass die Zusammensetzung der Individualrezeptur dem Individualrezept entspricht und somit die Inhaltsstoffe adäquat auf den Verwender zugeschnitten sind.

Durch die Anzeigeeinrichtung können dem Anwender des Apotheken-Rezepturherstellungssystems zum jedem beliebigen Zeitpunkt Informationen über die Herstellung bereitgestellt werden.

In einer Ausführungsform der Erfindung ist die Wägeeinrichtung mit der Anzeigeeinrichtung gekoppelt, so dass die Anzeigeeinrichtung dem Bediener die erforderlichen Rohstoffe mitsamt der jeweils benötigten Menge anzeigt. Das Hinzugeben von falschen Rohstoffen sowie eine falsche Portionierung der Rohstoffe werden dadurch zuverlässig vermieden.

Durch die Mischeinrichtung wird das Mischen der Rohstoffe in der Individualrezeptur ermöglicht. Wenn die Rohstoffe in einem sterilen Gefäß mit einem sterilen Werkzeug zum Mischen vermengt werden, kann das Auftreten von Keimen in der Individualrezeptur auf ein Minimum reduziert werden.

Unter Mischen werden erfindungsgemäß auch die folgenden Tätigkeiten verstanden: lösen, verteilen, suspendieren, emulgieren, filtrieren, schütteln, rühren, vermengen, hinzufügen, zubereiten, herstellen, anrühren, durchmengen, vermischen, verrühren, einrühren.

Unter Verarbeitungsgeräten werden Apparaturen zur Herstellung von pharmazeutischen Rezepturen verstanden inklusive Zubehör, wie zum Beispiel Rührwerkzeuge, Mischgefäße und weiteres Zubehör, die mit der Mischeinrichtung verwendet werden können.

Gemäß einer ersten Ausführungsform der Erfindung ist die Datenverarbeitungseinheit so ausgebildet, dass sie in dem Fall, dass die Ermittlung ergibt, dass ein erforderlicher Rohstoff nicht mehr vorhanden oder nicht mehr in genügender Menge vorhanden ist, eine entsprechende Nachricht an einen Benutzer ausgebbar ist oder eine elektronische Bestellnachricht versendbar ist.

Dadurch kann, in dem Falle, dass ein erforderlicher Rohstoff fehlt, schnell eine Aussage getroffen werden, dass die Herstellung der Individualrezeptur nicht unmittelbar möglich ist. Zudem wird die Nachbestellung von fehlenden Rohstoffen automatisiert, was Arbeit spart sowie die Benutzerfreundlichkeit und die Effektivität verbessert.

Als eine weitere Ausführungsform der Erfindung weist der apothekenbezogene Bestandsdatenbankbereich weiterhin für wenigstens einen Rohstoffidentifikationsparameter einen zugeordneten Rohstoffhaltbarkeitsparameter auf. Dadurch wird die Haltbarkeit für jeden Rohstoff im Apotheken-Rezepturherstellungssystem selbst erfasst, was eine stets aktuelle und automatisierbare Kontrolle erlaubt, ob die vorhandenen Rohstoffe noch verarbeitet werden können.

Eine weitere Ausführungsform der Erfindung besteht darin, dass der apothekenbezogene Bestandsdatenbankbereich weiterhin für wenigstens einen Rohstoffidentifikationsparameter ein zugeordnetes Rohstoffherstellungsdatum aufweist, und wobei die Zusammensetzungsinformation der Herstellungs-Datenbank für wenigstens einen Rohstoff eine zugeordnete Haltbarkeitsdauer aufweist, und wobei die Datenverarbeitungseinheit weiterhin so ausgebildet ist, dass es einen Vergleich der Haltbarkeitsdauer und dem Rohstoffherstellungsdatum plus aktuellem Datum für einen Rohstoff des Individualrezepts ermittelbar ist, ob dieser Rohstoff noch verwendbar und die Individualrezeptur herstellbar ist.

Somit wird zentral durch die Herstellungs-Datenbank ein Standard für die Haltbarkeit jedes einzelnen Rohstoffs geschaffen, dessen Einhaltung das Apotheken-Rezepturherstellungssystem selbst überprüft. Dies nimmt dem Apotheker weitere Arbeit ab, und erlaubt ebenfalls eine stets aktuelle und automatisierbare Kontrolle, ob die vorhandenen Rohstoffe noch verarbeitet werden können.

Zudem kann zum Zeitpunkt der Herstellung einer Individualrezeptur dokumentiert werden, dass die verwendeten Rohstoffe gut verwendbar sind, und Reklamationen oder Beanstandungen können vermieden werden.

Gemäß einer weiteren Ausführungsform der Erfindung ist die Datenverarbeitungseinheit so ausgebildet, dass in dem Fall, dass die Ermittlung ergibt, dass ein erforderlicher Rohstoff nicht mehr verwendbar ist, eine entsprechende Nachricht an einen Benutzer ausgebbar ist oder eine elektronische Bestellnachricht versendbar ist.

Mit Hilfe dieser Benachrichtigung oder der elektrischen Bestellnachricht wird eine automatische Bestandspflege in der Apotheke ermöglicht, und es ist ein automatisierter Bestellablauf gewährleistet, was Arbeit spart und die Benutzerfreundlichkeit und die Effektivität weiter verbessert.

Als eine weitere mögliche Ausführungsform kann der Apotheker durch das Apotheken-Rezepturherstellungssystem rechtzeitig informiert werden, dass ein Rohstoff fehlt oder zur Neige geht. Hierfür können Bestands-Minimumwerte für die Rohstoffe im Apotheken-Rezepturherstellungssystem, insbesondere in dem apothekenbezogenen Bestands-Datenbankbereich, hinterlegt sein, mit denen die vorhandenen Rohstoffmengen verglichen werden. In dem Fall, dass für einen Rohstoff ein Bestands-Minimumwert unterschritten wird, kann eine entsprechende Nachricht an einen Benutzer ausgegeben werden oder eine elektronische Bestellnachricht versendet werden. Dies reduziert den Aufwand und verbessert die Benutzerfreundlichkeit und die Effektivität weiter. Zudem wird verhindert, dass eine Individualrezeptur kurze Zeit später aufgrund eines oder mehrerer fehlender Rohstoffe nicht hergestellt werden kann.

In einer weiteren Ausführungsform der Erfindung weist die Herstellungs-Datenbank weiterhin Plausibilitätsprüfungsinformationen auf, insbesondere Kombinationen von miteinander unverträglichen Rohstoffen oder für eine bestimmte Person oder Indikation ungeeigneter Rohstoffe, wobei die Datenverarbeitungseinheit weiterhin so ausgebildet ist, dass eine Plausibilitätsprüfung durchführbar ist, bei der die ermittelten, zur Herstellung erforderlichen Rohstoffe und deren Mengen mit wenigstens einem Teil der Plausibilitätsprüfungsinformationen vergleichbar sind.

Dadurch, dass diese Plausibilitätsprüfungsinformationen in der Herstellungs-Datenbank hinterlegt sind, wird eine zusätzliche Sicherheitsüberprüfung dahingehend durchgeführt, dass Fehler bei der Herstellung von Individualrezepturen, die von dem Individualrezept herrühren, vermieden werden. Durch das zentrale Bereithalten von solchen Plausibilitätsprüfungsinformationen in der Herstellungs-Datenbank wird der durch das erfindungsgemäße Apotheken-Rezepturherstellungssystem geschaffene Qualitätsstandard weiter erhöht.

Gemäß einer weiteren Ausführungsform der vorliegenden Erfindung ist eine Beschriftungseinheit, insbesondere ein Etikettendrucker, vorgesehen, der Informationen über die hergestellte Individualrezeptur ausdrucken kann. Dadurch können dem Verwender die relevanten Informationen über die Individualrezeptur zusammen mit dieser bereitgestellt werden, insbesondere Informationen über die Individualrezeptur, wie Bestandteile, Verträglichkeiten oder Anwendungshinweise.

Wenn die Mischeinrichtung als Misch- und Rühreinheit ausgebildet ist, die eine Halteeinrichtung für ein Gefäß, insbesondere mit einem Innenvolumen von 10 ml bis 5000 ml, vorzugsweise ein Gefäß bis zu 1000ml, ggf. eine Hubeinheit, einen Rührstab und einen Elektromotor zum rotierenden Antreiben des Rührstabs aufweist, wobei an den Rührstab ein Rührwerkzeug angebracht oder anbringbar ist, können Individualrezepturen automatisch hergestellt werden.

In einer weiteren Ausführungsform kann die Mischeinrichtung über eine Kühlvorrichtung oder eine Wärmevorrichtung, ebenso über eine siebende, schüttelnde oder einbettende Vorrichtung verfügen. Hierdurch ist eine hohe Flexibilität bei der Herstellung der Individualrezepturen gewährleistet.

Dementsprechend kann mit dieser Mischeinrichtung jede Art von Salben, halbfesten Zubereitungen, Augentropfen, Tinkturen, Tabletten, Kapseln oder Tees hergestellt werden.

Gemäß einer weiteren Ausführungsform der vorliegenden Erfindung kann der apothekenbezogene Bestandsdatenbankbereich Teil einer apothekeninternen Bestandsdatenbank sein oder eine apothekeninterne Bestandsdatenbank ausbilden. Die apothekeninterne Bestandsdatenbank kann auf einem apothekeninternen Computer gespeichert sein, insbesondere auf dem Computer, der auch die Datenverarbeitungseinheit beinhaltet.

Bei dieser Ausführungsform stehen die Bestandsdaten lokal in der Apotheke zur Verfügung, und auf diese kann ohne Internetzugriff zugegriffen werden.

Gemäß einer weiteren Ausführungsform des erfindungsgemäßen Apotheken-Rezepturherstellungssystems ist der apothekenbezogene Bestandsdatenbankbereich Teil der Herstellungs-Datenbank.

Bei dieser Ausführungsform stehen alle Daten in der Herstellungs-Datenbank zur Verfügung, die üblicherweise entfernt von der Apotheke ist, aber auch Apotheken-intern ausgebildet oder verteilt vorliegen kann. Auf diese Daten kann über ein Netzwerk oder das Internet von dem jeweiligen Computer der Apotheke aus zugegriffen werden.

Die Daten können per Benutzername und Passwort geschützt sein, sodass nur die entsprechend autorisierten Personen auf die Daten, insbesondere auf den apothekenbezogenen Bestandsdatenbankbereich Zugriff haben.

Gemäß einer weiteren Ausführungsform ist das erfindungsgemäße Apotheken-Rezepturherstellungssystem so ausgebildet, dass, wenn die Herstellungs-Datenbank auf einem Server, insbesondere auf einem entfernt von dem apothekenbezogenen Computer angeordneten Server, gespeichert ist, die Datenverarbeitungseinheit über eine Datenverbindung auf die Herstellungs-Datenbank zugreifen kann.

Hierdurch ist gewährleistet, dass die Herstellungsdaten zentral und unabhängig von einem Computersystem in der Apotheke gespeichert sind. Durch Sicherungskopien und durch die Verwendung eines Backup Servers kann ein Datenverlust vermieden werden. Das System ist demnach ausfallsicher und zuverlässig.

Die Erfindung betrifft auch eine Anordnung, gemäß Anspruch 15, von mehreren Apotheken-Rezepturherstellungssystemen der hier beschriebenen Art, wobei die Apotheken-Rezepturherstellungssysteme, mit Ausnahme der Herstellungs-Datenbank, separat voneinander vorliegen und ihre Datenverarbeitungseinheiten so ausgebildet sind, dass sie Zugriff auf Daten einer gemeinsamen Herstellungs-Datenbank haben, die Zusammensetzungs-Informationen, die einer Vielzahl von Individualrezepturen die jeweils enthaltenen Rohstoffe sowie deren Mengenverhältnisse zuordnet, sowie Herstellungsinformationen aufweist, die für jede enthaltene Individualrezeptur Herstellungs-Informationen über Verarbeitungsgeräte, Zeitdauer und Vorgangs-Parameter der zu mischenden Rohstoffe beinhaltet.

Bei einer solchen erfindungsgemäßen Anordnung wird eine gemeinsamen Herstellungs-Datenbank durch eine Vielzahl von Apotheken-Rezepturherstellungssystemen genutzt. Dadurch wird sichergestellt, dass Individualrezepturen von unterschiedlichen Apotheken nach den Informationen der Herstellungs-Datenbank hergestellt werden und stets den gleichen Qualitätsanspruch erfüllen.

Die apothekenbezogenen Bestandsdatenbankbereiche der Apotheken-Rezepturherstellungssysteme können entweder lokal auf Computern der jeweiligen Apotheke vorgesehen sein, alternativ dazu ist es möglich, die apothekenbezogenen Bestandsdatenbankbereiche entfernt von der jeweiligen Apotheke vorzusehen, insbesondere in die Herstellungs-Datenbank zu integrieren oder mit dieser zu verknüpfen.

Die oben mit Bezug auf das Apotheken-Rezepturherstellungssystem angegebenen Vorteile und Ausführungsformen treffen in gleicher Weise auf die erfindungsgemäße Anordnung von mehreren Apotheken-Rezepturherstellungssystemen der hier beschriebenen Art zu. Diese werden, um Wiederholungen zu vermeiden, nicht noch einmal aufgeführt.

Die Erfindung betrifft auch ein Apothekenrezeptur-Herstellungsverfahren gemäß Anspruch 1, zum Herstellen von pharmazeutischer Individualrezepturen, wie Rezepturen für Salben, halbfeste Zubereitungen, Augentropfen Tinkturen, Tabletten, Kapseln oder Tees, in Mengen bis zu 5 kg, vorzugsweise bis zu 1 kg, aufweisend die folgenden Schritte: Einlesen von Individualrezeptdaten eines Individualrezepts, Ermitteln, unter Zugriff auf eine Herstellungs-Datenbank der zu der Herstellung des Individualrezepts erforderlichen Rohstoffe und deren Menge sowie der Zeitdauer, der Verarbeitungsgeräte und der Vorgangsparameter des Mischvorgangs, wobei die Herstellungs-Datenbank Zusammensetzungsinformationen, die einer Vielzahl von Individualrezepturen die jeweils enthaltenen Rohstoffe sowie deren Mengenverhältnisse zuordnen, sowie Herstellungsinformationen aufweist, die für jede enthaltene Individualrezeptur Herstellungsinformationen, wie Verarbeitungsgeräte, Zeitdauer und Vorgangsparameter der zu mischenden Rohstoffe beinhaltet, Ermitteln, unter Zugriff auf einen apothekenbezogenen Bestandsdatenbankbereich durch einen Vergleich der zur Herstellung der erforderlichen Rohstoffe und deren Mengen mit den verfügbaren Rohstoffen, ob das Individualrezept herstellbar ist, wobei der apothekenbezogene Bestandsdatenbankbereich Rohstoffidentifikationsparameter der in der Apotheke verfügbaren pharmazeutischen Rohstoffe, sowie für wenigstens einen Rohstoffidentifikationsparameter einen zugeordneten Rohstoffmengenparameter, sowie die Verarbeitungsgeräte wie Identifikationsparameter der in der Apotheke verfügbaren Verarbeitungsgeräte aufweist, Ausgeben, wenn das Individualrezept herstellbar ist, wenn Verarbeitungshinweise zur Herstellung der Individualrezeptur an einen Benutzer, die Information über die erforderlichen Rohstoffe, deren Mengen, die erforderlichen Verarbeitungsgeräte, sowie die Zeitdauer und die Vorgangsparameter des Mischvorgangs beinhalten, und Abwiegen der Mengen der für das eingelesene Individualrezept erforderlichen Rohstoffe und Mischen derselben zu dem Individualrezept.

Die oben mit Bezug auf das Apotheken-Rezepturherstellungssystem angegebenen Vorteile und Ausführungsformen treffen in gleicher Weise auf das erfindungsgemäße Apothekenrezeptur-Herstellungsverfahren zu. Diese werden, um Wiederholungen zu vermeiden, nicht noch einmal aufgeführt.

Gemäß einer Ausführungsform des Apothekenrezeptur-Herstellungsverfahrens weist es weiterhin den Schritt des Ausgebens einer entsprechenden Nachricht an einen Benutzer oder das Versenden einer elektronischen Bestellnachricht auf, in dem Fall, dass die Ermittlung ergibt, dass ein erforderlicher Rohstoff nicht mehr vorhanden oder nicht mehr in genügender Menge vorhanden ist.

Mit Hilfe dieser Benachrichtigung oder der elektrischen Bestellnachricht ist ein automatisierter Bestellablauf gewährleistet, was Arbeit spart und die Benutzerfreundlichkeit und die Effektivität weiter verbessert.

Gemäß einer weiteren Ausführungsform weist der apothekenbezogene Bestands-Datenbankbereich weiterhin für wenigstens einen Rohstoffidentifikations-Parameter ein zugeordnetes Rohstoffherstellungsdatum auf, und die Zusammensetzungs-Informationen der Herstellungs-Datenbank weist für wenigstens einen Rohstoff eine zugeordnete Haltbarkeitsdauer auf. Es wird weiterhin ermittelt, aus einem Vergleich der Haltbarkeitsdauer und dem Rohstoffherstellungsdatum plus aktuellem Datum für einen Rohstoff des Individualrezepts, ob dieser Rohstoff noch verwendbar und die Individualrezeptur herstellbar ist.

Somit wird zentral durch die Herstellungs-Datenbank ein Standard für die Haltbarkeit jedes einzelnen Rohstoffs geschaffen, dessen Einhaltung das Apotheken-Rezepturherstellungssystem selbst überprüft. Dies nimmt dem Apotheker weitere Arbeit ab, und erlaubt ebenfalls eine stets aktuelle und automatisierbare Kontrolle, ob die vorhandenen Rohstoffe noch verarbeitet werden können.

Zudem kann zum Zeitpunkt der Herstellung einer Individualrezeptur dokumentiert werden, dass die verwendeten Rohstoffe gut verwendbar sind, und Reklamationen oder Beanstandungen können vermieden werden.

Gemäß einer weiteren Ausführungsform umfasst das erfindungsgemäße Verfahren weiterhin den Schritt des Ausgebens einer entsprechenden Nachricht an einen Benutzer oder des Versendens einer elektronischen Nachricht, in dem Fall, dass die Ermittlung ergibt, dass ein erforderlicher Rohstoff nicht mehr verwendbar ist.

Mit Hilfe dieser Benachrichtigung oder der elektrischen Bestellnachricht wird eine automatische Bestandspflege in der Apotheke ermöglicht, und es ist ein automatisierter Bestellablauf gewährleistet, was Arbeit spart und die Benutzerfreundlichkeit und die Effektivität weiter verbessert.

Gemäß einer weiteren Ausführungsform des erfindungsgemäßen Verfahrens weist die Herstellungs-Datenbank weiterhin Plausibilitätsprüfungsinformationen auf, insbesondere Kombinationen von miteinander unverträglichen Rohstoffen oder für eine bestimmte Person oder Indikation ungeeignete Rohstoffe, wobei es weiterhin den Schritt aufweist, Durchführen einer Plausibilitätsprüfung, bei der die ermittelten, zur Herstellung erforderlichen Rohstoffe und deren Mengen mit wenigstens einem Teil der Plausibilitätsprüfungsinformationen vergleichbar sind.

Es wird eine zusätzliche Sicherheitsüberprüfung dahingehend durchgeführt, dass Fehler bei der Herstellung von Individualrezepturen, die von dem Individualrezept herrühren, vermieden werden. Durch das zentrale Bereithalten von solchen Plausibilitätsprüfungsinformationen in der Herstellungs-Datenbank wird der durch das erfindungsgemäße Apotheken-Rezepturherstellungssystem geschaffene Qualitätsstandard weiter erhöht.

Zusätzlich zum Mischen können auch die folgenden Tätigkeiten zur Herstellung von Individualrezepturen durchgeführt werden: schmelzen, mörsern, mahlen, sieben, quellen, erhitzen, abkühlen, emulgieren, reagieren lassen, kaltrühren, wiegen, ausgießen/gießen, auffüllen, einbetten, pressen, benetzen, granulieren, sterilisieren, retardieren, pelletieren, prüfen, homogenisieren und abfüllen bzw. umfüllen.

Die Erfindung ist nachfolgend anhand von Ausführungsbeispielen mit Bezug auf die beiliegenden Figuren näher erläutert.
Fig. 1 zeigt eine schematische Ansicht eines ersten Apotheken-Rezepturherstellungssystems gemäß einem ersten Ausführungsbeispiel der vorliegenden Erfindung;
Fig. 2 zeigt eine schematische Ansicht eines zweiten Apotheken-Rezepturherstellungssystems gemäß einem weiteren Ausführungsbeispiel der vorliegenden Erfindung;
Fig. 3 zeigt die schematische Ansicht des ersten Apotheken-Rezepturherstellungssystems aus Figur 1, wobei zusätzlich noch beispielhaft die vorhandenen Rohstoffe und Verarbeitungsgeräte dargestellt sind;
Fig. 4 zeigt eine schematische Darstellung der in der Bestandsdatenbank des Apotheken-Rezepturherstellungssystems aus den Figuren 1 bis 3 enthaltenen Informationen;
Fig. 5 zeigt eine schematische Darstellung der in der Herstellungs-Datenbank des Apotheken-Rezepturherstellungssystems aus den Figuren 1 bis 3 enthaltenen Informationen;
Fig. 6 zeigt ein Ablaufdiagramm eines Apotheken-Rezepturherstellungsverfahrens gemäß einem weiteren Ausführungsbeispiel der vorliegenden Erfindung;
Fig. 7 zeigt eine schematische Darstellung ein Gefäßes mit darin eingefüllten Rohstoffen, gemäß einem weiteren Ausführungsbeispiel der vorliegenden Erfindung; und
Fig. 8 zeigt eine schematische Darstellung einer Misch- und Rühreinheit, gemäß einem weiteren Ausführungsbeispiel der vorliegenden Erfindung.

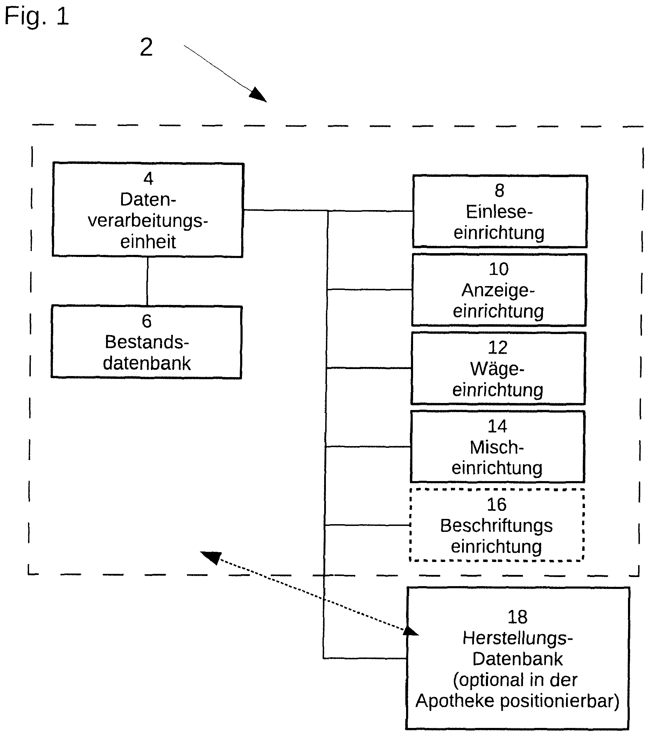

Fig. 1 zeigt eine schematische Ansicht eines ersten Apotheken-Rezepturherstellungssystems 2 gemäß einem ersten Ausführungsbeispiel der vorliegenden Erfindung.

Das erste Apotheken-Rezeptur-Herstellungssystem 2 umfasst eine Datenverarbeitungseinheit 4, eine Bestandsdatenbank 6, eine Einleseeinrichtung 8, eine Anzeigeeinrichtung 10, eine Wägeeinrichtung 12, eine Mischeinrichtung 14, eine optional vorzusehende Beschriftungseinrichtung 16 und eine Herstellungs-Datenbank 18.

Der in Figur 1 gestrichelt dargestellte Bereich umfasst diejenigen Elemente des ersten Apotheken-Rezeptur-Herstellungssystems 2, die apothekenintern vorgesehen sind. Dabei handelt es sich um die Elemente 4 bis 16.

Die Herstellungs-Datenbank 18 ist entfernt von der Apotheke vorgesehen, und der Zugriff der Datenverarbeitungseinheit 4 auf die in der Herstellungs-Datenbank 18 vorhandenen Daten erfolgt über eine geeignete Netzwerkverbindung, bspw. über das Internet. Dadurch werden alle Inhalte der Herstellungs-Datenbank 18 zentral und entfernt von der Apotheke gespeichert und für einen Zugriff durch die Datenverarbeitungseinheit 4 des ersten Apotheken-Rezeptur-Herstellungssystems 2 sowie für weitere hier nicht gezeigte Apotheken bereitgehalten.

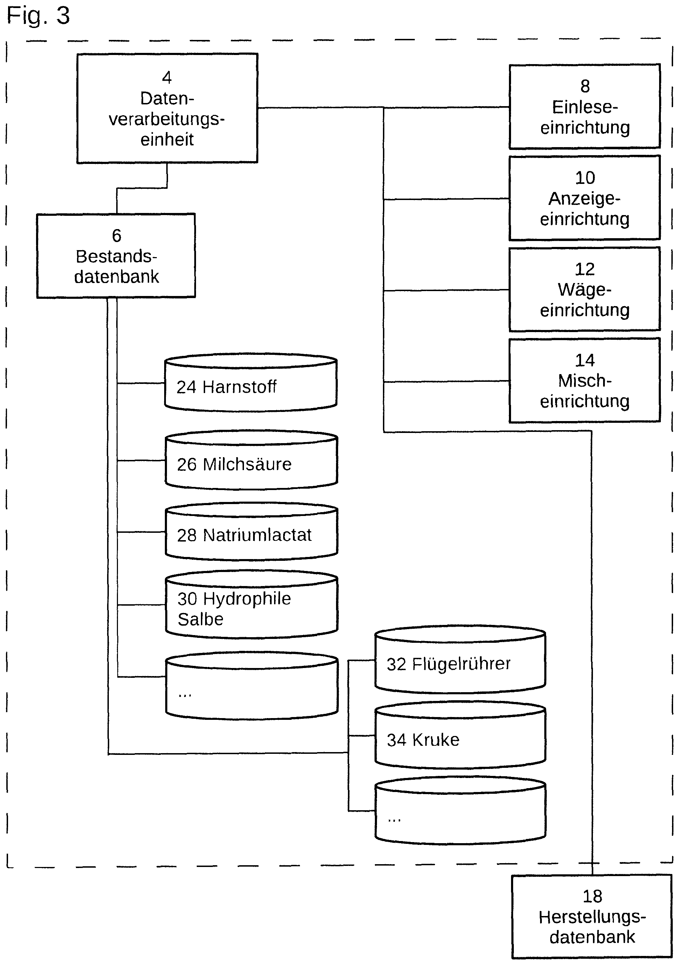

Die Inhalte der Bestandsdatenbank 6 und der Herstellungs-Datenbank 18 und die Funktionsweise der Datenbankverarbeitungseinheit 4 werden nachfolgend mit Bezug auf die Figuren 3 bis 6 näher erläutert.

Die Einleseeinrichtung 8 ist im vorliegenden Ausführungsbeispiel als Scanner mit automatischer Schrifterkennung ausgebildet, der in der Lage ist, Individualrezepte automatisch einzulesen. Alternativ dazu kann die Einleseeinrichtung 8 auch als Kamera mit automatischer Schrifterkennung, als manuelle Einleseeinrichtung, wie eine Tastatur, ein Touchscreen oder eine Maus mit Bildschirm oder als akustische Einleseeinrichtung, wie ein Mikrofon mit Spracherkennung ausgebildet sein.

Auf der Anzeigeeinrichtung 10 können dem Apotheker zu jedem beliebigen Zeitpunkt Informationen über die Herstellung einer Individualrezeptur, basierend auf dem Individualrezept angezeigt werden.

Die Wägeeinrichtung 12 kann als einfache Waage oder als spezielle Labor- oder Analysewaage ausgeführt sein, mittels derer der Apotheker die jeweils erforderlichen Rohstoffe in der jeweils erforderlichen Menge abwiegen kann. Die Wägeeinrichtung 12 kann vorteilhafterweise mit der Anzeigeeinrichtung 10 gekoppelt werden, sodass das Abwiegen computer- und anzeigenunterstützt vorgenommen werden kann. Alternativ kann das Abwiegen auch manuell erfolgen.

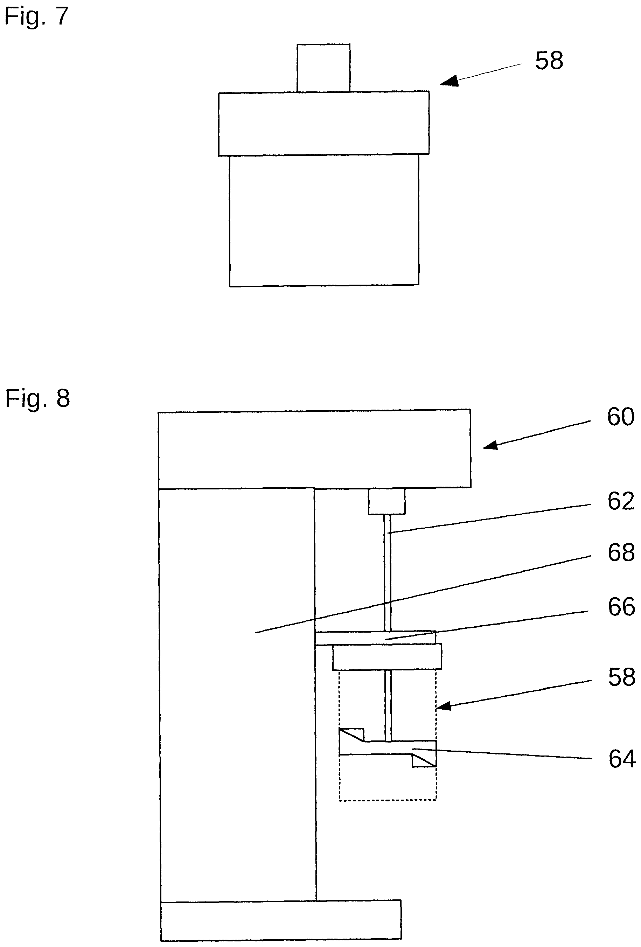

Die Mischeinrichtung 14 ist so ausgebildet, dass die Rohstoffe in der gewünschten Weise zu der Individualrezeptur vermischt werden können. Ein Beispiel für eine solche Mischeinrichtung ist in der Figur 8 angegeben. Dies ist jedoch als rein beispielhaft und nicht einschränkend zu verstehen.

Die Beschriftungseinrichtung 16 kann z. B. als Etikettendrucker ausgebildet sein, der Informationen über die hergestellte Individualrezeptur auf ein Etikett druckt. Dadurch können dem Verwender die relevanten Informationen über die Individualrezeptur zusammen mit dieser bereitgestellt werden, z. B. Informationen über die Individualrezeptur selbst, deren Bestandteile, über Verträglichkeiten, Anwendungshinweise, Mindesthaltbarkeitsdatum, Name des Herstellers und weitere Informationen.

Die Datenverarbeitungseinheit 4 und die Bestandsdatenbank 6 können auf einem apothekeninternen Computer vorgesehen sein. Die Bestandsdatenbank 6 kann auch als Bestandsdatenbankbereich einer Datenbank des apothekeninternen Computers ausgebildet sein. Bei dem apothekeninternen Computer kann es sich auch um einen in der Mischeinrichtung integriertem Computer handeln.

Die Datenverarbeitungseinheit 4 ist mit den Elementen 6 bis 18 verbunden und so ausgebildet, dass sie auf die Bestandsdatenbank 6 und auf die Herstellungs-Datenbank 18 zugreifen kann, dass sie Daten von der Einleseeinrichtung 8 und/oder Wägeeinrichtung empfangen kann und dass sie die Anzeigeeinrichtung 10, die Mischeinrichtung 14 und/oder die Beschriftungseinrichtung 16 steuern kann.

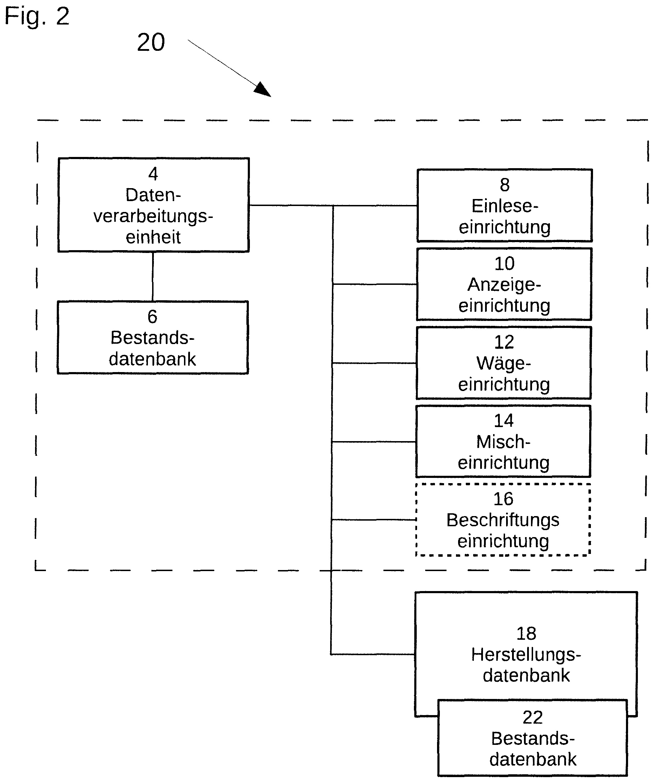

Fig. 2 zeigt eine schematische Ansicht eines zweiten Apotheken-Rezepturherstellungssystems 20 gemäß einem weiteren Ausführungsbeispiel der vorliegenden Erfindung.

Das zweite Apotheken-Rezeptur-Herstellungssystem 20 entspricht im Wesentlichen dem ersten Apotheken-Rezeptur-Herstellungssystem 2 aus Figur 1, wobei die Bestandsdatenbank 22 nicht apothekenintern, sondern apothekenextern vorgesehen und in die Herstellungs-Datenbank 18 integriert ist.

Dadurch werden alle Inhalte der Bestandsdatenbank 22 und der Herstellungs-Datenbank 18 zentral und entfernt von der Apotheke gespeichert und für einen Zugriff durch die Datenverarbeitungseinheit 4 des zweiten Apotheken-Rezeptur-Herstellungssystems 20 sowie für weitere hier nicht gezeigte Apotheken bereitgehalten.

In einem Fall, dass mehrere Apotheken auf die Herstellungs-Datenbank 18 zugreifen, ist es möglich, dass Bereiche der Herstellungs-Datenbank einzelnen Apotheken zugeordnet sein können, so dass nur die entsprechenden Apotheken darauf zugreifen können und dürfen.

Fig. 3 zeigt die schematische Ansicht des ersten Apotheken-Rezepturherstellungssystems 2, wobei zusätzlich noch beispielhaft die vorhandenen Rohstoffe und Verarbeitungsgeräte dargestellt sind.

Gemäß Figur 3 verfügt die Apotheke, die mit dem erfindungsgemäßen Apotheken-Rezeptur-Herstellungssystem 2 ausgestattet ist, über ein Rohstofflager mit einer Anzahl der für die Herstellung von üblichen pharmazeutischen Individualrezepturen erforderlichen Rohstoffe, von denen in Figur 3 der Rohstoff: Harnstoff 24, der Rohstoff: Milchsäure 26, der Rohstoff: Natriumlaktat 28 und der Rohstoff: hydrophile Salbe 30 dargestellt sind. Zusätzlich ist angedeutet, dass auch weitere Rohstoffe, die für das vorliegende Ausführungsbeispiel jedoch nicht relevant sind, vorhanden sein können oder vorhanden sind.

Des Weiteren sind in der Apotheke eine Anzahl von Verarbeitungsgeräten vorhanden, mittels derer die Individualrezepturen hergestellt werden können, beispielhaft ist hier ein Flügelrührer 32 und eine Kruke 34 dargestellt, und es ist angedeutet, dass noch viele weitere solche Verarbeitungsgeräte vorhanden sein können oder vorhanden sind.

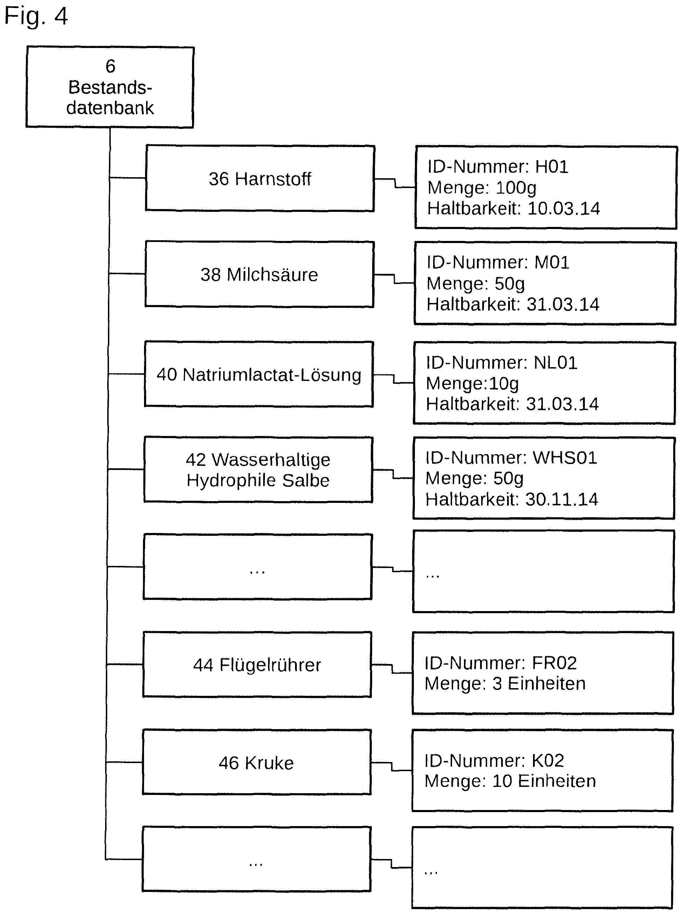

Fig. 4 zeigt eine schematische Darstellung der in der Bestandsdatenbank 6 des Apotheken-Rezepturherstellungssystems 2 und 20 enthaltenen Informationen.

Gemäß Figur 4 ist für jeden vorhandenen Rohstoff und für jedes vorhandene Verarbeitungsgerät jeweils ein Datensatz in der Bestandsdatenbank 6 abgespeichert.

Jeder Rohstoffdatensatz 36 bis 42 beinhaltet die Bezeichnung des jeweiligen Rohstoffes, einen Rohstoffidentifikations-Parameter, einen Rohstoffmengen-Parameter und einen Rohstoffhaltbarkeits-Parameter.

Jeder Verarbeitungsgerät-Datensatz 44, 46 beinhaltet die Bezeichnung des jeweiligen Verarbeitungsgeräts und einen zugeordneten Verarbeitungsgerät-Identifikations-Parameter.

In der Bestandsdatenbank 6 ist somit der in der Apotheke verfügbare Bestand des Rohstofflagers mit Menge und Haltbarkeit der einzelnen Rohstoffe und der in der Apotheke verfügbare Bestand an Verarbeitungsgeräten gespeichert.

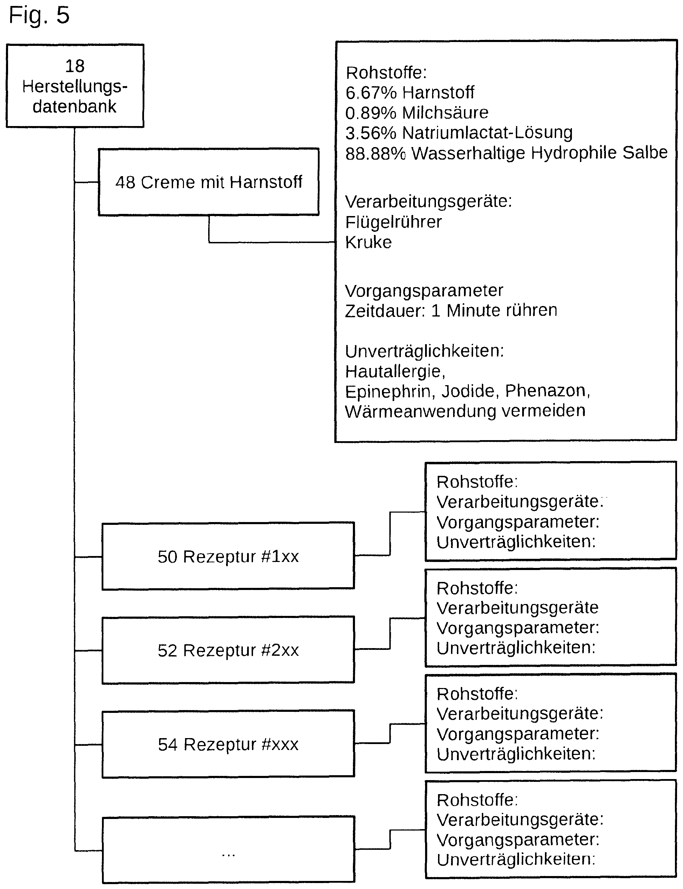

Fig. 5 zeigt eine schematische Darstellung der in der Herstellungs-Datenbank 18 der Apotheken-Rezepturherstellungssystem 2 und 20 enthaltenen Informationen.

Gemäß Figur 5 sind in der Herstellungs-Datenbank 18 Datensätze für eine Vielzahl von Individualrezepturen gespeichert. Jeder Datensatz beinhaltet die Bezeichnung einer Individualrezeptur, Informationen über die zur Herstellung dieser Individualrezeptur erforderlichen Rohstoffe und deren Mengenverhältnisse, Herstellungsinformationen über die benötigten Verarbeitungsgeräte und die Vorgangs-Parameter der zu mischenden Rohstoffe sowie ggf. Zusatzinformationen für eine Plausibilitätsprüfung, z. B. Unverträglichkeiten und weitere Verarbeitungshinweise.

Der Datensatz "Creme mit Harnstoff' 48 beinhaltet die Rohstoffe Harnstoff, Milchsäure, Natriumlaktatlösung und wasserhaltige hydrophile Salbe als für die Herstellung erforderliche Rohstoffe und deren Mengenverhältnisse 6,67 % / 0,89 % / 3,56 % und 88,88 %. Weiterhin beinhaltet der Datensatz "Creme mit Harnstoff' 48 die für die Herstellung erforderlichen Verarbeitungsgeräte, nämlich einen Flügelrührer und eine Kruke, die Vorgangs-Parameter, nämlich Rühren über eine Zeitdauer von 1 min, sowie indizierte Unverträglichkeiten und weitere Anwendungshinweise, nämlich Hautallergie, Epinephrin, Jodide, Phenazon und Wärmeanwendung vermeiden.

Für eine Vielzahl weiterer Individualrezepturen, die in der Folge aus Gründen der einfacheren Darstellung nicht im Einzelnen aufgeführt sind, sind ebenfalls die Bezeichnung der Individualrezeptur, die Rohstoffe und deren Mengenverhältnisse, die Verarbeitungsgeräte, die Vorgangs-Parameter und die Zusatzinformationen gespeichert.

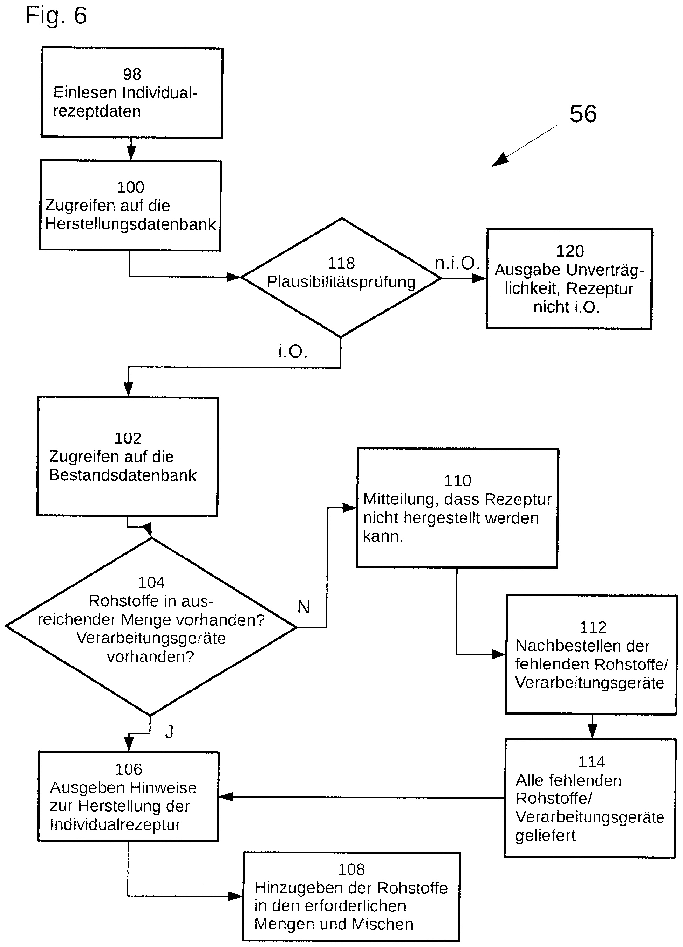

Fig. 6 zeigt ein Ablaufdiagramm eines Apotheken-Rezepturherstellungsverfahrens 56.

Gemäß Figur 6 wird zunächst im Verfahrensschritt 98 ein Individualrezept mit seinen Individualrezeptdaten mittels der Einleseeinrichtung 8 eingelesen. Im nachfolgenden Ausführungsbeispiel steht auf dem Rezept: "Creme mit Harnstoff, 100 g".

Die Datenverarbeitungseinheit 4 erfasst dieses Individualrezept und führt in der Herstellungs-Datenbank 18 eine Abfrage dahingehend durch, ob dort ein Datensatz "Creme mit Harnstoff' vorhanden ist und wenn ja, greift sie auf diesen Datensatz zu. (Verfahrensschritt 100). Vorliegend ist ein entsprechender Datensatz vorhanden, nämlich der Datensatz 48 "Creme mit Harnstoff', und auf diesen greift die Herstellungs-Datenbank 18 zu.

Anschließend kann im Verfahrensschritt 118 eine optional vorgesehene Plausibilitätsprüfung erfolgen. So kann z. B., falls auf dem Individualrezept neben der Angabe "Creme mit Harnstoff 100 g" die dafür erforderlichen Rohstoffe und Mischungsverhältnisse, oder die Diagnose und der Anwendungszweck angegeben sind, eine Plausibilitätsprüfung z.B. wie folgt durchgeführt werden. Die auf dem Individualrezept angegebenen Rohstoffe können mit den in der Herstellungs-Datenbank 18 enthaltenen Rohstoffen abgeglichen werden und bei größeren Abweichungen, insbesondere bei voneinander abweichenden Rohstoffen, kann eine Fehlermeldung durch die Anzeigeeinrichtung 10 ausgegeben werden, gemäß der die Creme mit Harnstoff laut Herstellungs-Datenbank 18 anders hergestellt wird (Verfahrensschritt 120). Wenn z. B., im Extremfall, die Creme mit Harnstoff versehentlich zur Behandlung einer Hautallergie verschrieben worden ist, jedoch in dem Datensatz "Creme mit Harnstoff' 48 ausdrücklich die Unverträglichkeit dieser Individualrezeptur für eine Hautallergie angegeben ist, kann ebenfalls eine Fehlermeldung durch die Anzeigeeinrichtung 10 an den Apotheker ausgegeben werden (Verfahrensschritt 120).

Bei der Plausibilitätsprüfung 118 kann eine Unterscheidung dahingehend erfolgen, ob die festgestellte Abweichung zu einem unlösbaren Problem führt oder auf einfache Weise gelöst werden kann.

Wenn die Plausibilitätsprüfung 118 ein positives Ergebnis bringt, wird im Verfahrensschritt 102 damit fortgefahren, dass die Datenverarbeitungseinheit 4 auf die Bestandsdatenbank 6 zugreift. Wenn eine bei der Plausibilitätsprüfung 118 festgestellte Abweichung auf einfache Weise gelöst werden kann, kann ebenfalls mit dem Verfahrensschritt 102 fortgefahren werden.

Im Verfahrensschritt 104 erfolgt eine Überprüfung, ob die Rohstoffe, die gemäß dem Datensatz 48 für die Herstellung von Creme mit Harnstoff erforderlich sind, in der ausreichenden Menge in dem Rohstofflager der Apotheke vorhanden sind, wie dies durch die Bestandsdatenbank 6 abgebildet wird. Die Datenverarbeitungseinheit 4 ermittelt aus der Mengenangabe 100g auf dem eingelesenen Individualrezept und aus den Mengenangaben in dem Datensatz 48, dass für die Herstellung von 100 g Creme mit Harnstoff 6,67 g Harnstoff, 0,89 g Milchsäure, 3,56 g Natriumlaktatlösung und 88,88 g wasserhaltige hydrophile Salbe erforderlich sind. Nun führt die Datenverarbeitungseinheit 4 eine Abfrage in der Bestandsdatenbank 6 durch. Gemäß den Datensätzen 36, 38 und 40 sind der Harnstoff, die Milchsäure und das Natriumlaktat in ausreichender Menge vorhanden, jedoch ergibt die Überprüfung mit dem Datensatz "wasserhaltige hydrophile Salbe" 42 der Bestandsdatenbank 6, dass davon nur noch 50 g vorhanden sind, was nicht ausreicht, um die 100 g Creme mit Harnstoff herzustellen.

Im Verfahrensschritt 104 folgt des Weiteren die Überprüfung, ob die für die Herstellung der Individualrezeptur "Creme mit Harnstoff' erforderlichen Verarbeitungsgeräte in der Bestandsdatenbank 6 vorhanden sind. Da gemäß dem Datensatz 48 "Creme mit Harnstoff' als Verarbeitungsgeräte ein Flügelrührer und eine Kruke benötigt werden und diese gemäß den Datensätzen 44 und 46 der Bestandsdatenbank 6 vorhanden sind, ergibt diese Überprüfung ein positives Ergebnis. Eine Mischeinrichtung, insbesondere ein Rührer mit Antrieb, ist ohnehin vorhanden.

Der Verfahrensschritt 104 kann auch zweiteilig durchgeführt werden, sodass die Überprüfung der verfügbaren Rohstoffe und die Überprüfung der verfügbaren Verarbeitungsgeräte unabhängig voneinander durchgeführt werden.

Aufgrund des in zu geringer Menge vorhandenen Rohstoffs "wasserhaltige hydrophile Salbe" wird im Verfahrensschritt 110 eine Mitteilung durch die Anzeigeeinrichtung 10 an den Apotheker ausgegeben, dass die Individualrezeptur "Creme mit Harnstoff" derzeit nicht hergestellt werden kann, und gemäß Verfahrensschritt 112 erfolgt das Nachbestellen des fehlenden Rohstoffs "wasserhaltige hydrophile Salbe". Dies kann dadurch erfolgen, dass der Apotheker eine entsprechende Bestellung manuell in Auftrag gibt, oder automatisiert dadurch erfolgen, dass eine automatische Bestellnachricht an den Lieferanten gesendet wird.

Nach dem Liefern der fehlenden Rohstoffe gemäß Verfahrensschritt 114 kann mit der Herstellung der Individualrezeptur "Creme mit Harnstoff' gemäß Verfahrensschritt 106 fortgefahren werden.

Wenn nun in der Bestandsdatenbank 6 anstelle der Menge 50 g im Datensatz 42 für den in dem Rohstofflager der Apotheke vorhandenen Rohstoff "wasserhaltige hydrophile Salbe" eine Menge von 100 g oder mehr angezeigt würde, würde die Überprüfung im Verfahrensschritt 104 ein positives Ergebnis bringen und es würde unmittelbar mit dem Verfahrensschritt 106 fortgefahren werden.

In den Verfahrensschritten 106 und 108 erfolgt entweder eine vollautomatische, eine halbautomatische oder manuelle, computer- und anzeigenunterstützte Herstellung der Individualrezeptur. Zum Beispiel bei Teemischungen kann eine manuelle Herstellung erfolgen.

Dafür werden zunächst die Verarbeitungsgeräte Kruke und Flügelrührer in der Mischeinrichtung 14 installiert, dann werden die Rohstoffe in den oben angegebenen Mengen nacheinander abgewogen und in die Kruke eingefüllt. Schließlich erfolgt der Mischvorgang unter Verwendung der Vorgangsparameter: Zeitdauer 1 min rühren.

Schließlich kann noch durch die Beschriftungseinrichtung 16 ein Etikett gedruckt werden.

In einem weiteren Ausführungsbeispiel können die Datensätze 36 bis 42 optional noch mit einem Haltbarkeitsdatum für die im Rohstofflager befindlichen Rohstoffe versehen sein, wodurch eine automatische Kontrolle durch die Datenverarbeitungseinheit 4 ermöglicht wird, ob die vorhandenen Rohstoffe noch verwendbar sind oder ausgetauscht werden müssen.

Gemäß einem weiteren Ausführungsbeispiel sind in den Datensätzen 36 bis 42 der Bestandsdatenbank 6 nur die Herstellungszeitpunkte für die jeweiligen Rohstoffe enthalten, und die Haltbarkeitsdauer ergibt sich aus den Datensätzen 48 bis 54 der Herstellungs-Datenbank 18, sodass zu einem geeigneten Zeitpunkt, z. B. im Verfahrensschritt 104, eine Überprüfung erfolgen kann, ob die Rohstoffe noch verwendbar sind oder ausgetauscht werden müssen.

In Figur 7 ist ein typisches Gefäß 58 dargestellt, in das die zu mischenden Rohstoffe eingebracht werden und in dem diese vermischt werden. Dieses Gefäß 58 verfügt über einen verschließbaren Deckel.

Gemäß Figur 8 ist eine typische Misch- und Rühreinheit 60 dargestellt, mit einem soliden Standfuß, mit einem mittleren Grundkörper und mit einem nach vorne vorstehenden Oberteil, wobei sich von dem vorderen Bereich des Oberteils nach unten eine Antriebsachse 62 erstreckt, an dessen unterem Ende im vorliegenden Ausführungsbeispiel der benötigte Flügelrührer 64 angebracht ist. Anstelle dieses Flügelrührers 64 können auch andere Rührwerkzeuge an dem unteren Ende der Antriebsachse 62 befestigt werden.

Des Weiteren verfügt die Misch- und Rühreinheit 60 über eine Halterung 66 für ein Gefäß, die mittels einer im mittleren Grundkörper der Misch- und Rühreinheit 60 angeordneten, hier nicht zu sehenden Hubeinheit 68 nach unten und nach oben verfahrbar ist.

Des Weiteren kann die Misch- und Rühreinheit 60 noch über eine hier nicht gezeigte Anzeige und eine hier nicht gezeigte Wägeeinrichtung verfügen. Die Wägeeinrichtung kann auch selbst durch entsprechende Sensoren an der Halterung 66 und der Hubeinheit 68 ausgebildet sein.

Der apothekeninterne Computer mit der Datenverarbeitungseinheit 4 und ggf. mit dem Bestandsdatenbankbereich 6, falls dieser apothekenintern ausgeführt ist, kann entweder direkt in der Misch- und Rühreinheit 60 integriert sein oder er kann separat von dieser ausgebildet und mit dieser verbunden sein.

Für alle möglichen Weiterbildungen wird auf die vorstehende Beschreibung Bezug genommen.

Im Betrieb werden die Kruke 68 und der Flügelrührer 64, wie durch die Anzeigeeinrichtung angezeigt, bereitgestellt bzw. an der Misch- und Rühreinheit 60 montiert. Dann erfolgt das Abwiegen und Einfüllen der Rohstoffe in den erforderlichen Mengen, wie durch die Anzeigeeinrichtung angezeigt. Dann wird die Kruke 68 in die Mischposition nach oben verfahren, und es erfolgt der Mischvorgang gemäß der vorgeschriebenen Vorgangs-Parameter. Anschließend ist die Individualrezeptur fertig gemischt.

### BEZUGSZEICHENLISTE

- 2: erstes Apotheken-Rezepturherstellungssystem
- 4: Datenverarbeitungseinheit
- 6: apothekeninterner Bestandsdatenbankbereich
- 8: Einleseeinrichtung
- 10: Anzeigeeinrichtung
- 12: Wägeeinrichtung
- 14: Mischeinrichtung
- 16: Beschriftungseinrichtung
- 18: apothekenexterne Herstellungs-Datenbank
- 20: zweites Apotheken-Rezepturherstellungssystem
- 22: apothekenexterner Bestandsdatenbankbereich
- 24-30: Rohstoffe
- 32-34: Verarbeitungsgeräte
- 36-42: Datensätze für vorhandene Rohstoffe
- 44-46: Datensätze für vorhandene Verarbeitungsgeräte
- 48-54: Datensätze für Individualrezepturen
- 56: Apotheken-Rezepturherstellungsverfahren
- 98-114: Verfahrensschritte
- 58: Kruke
- 60: Misch- und Rühreinheit
- 62: Antriebsachse
- 64: Flügelrührer
- 66: Halterung für Gefäß
- 68: Hubeinheit

## Patentansprüche

1. Apotheken-Rezepturherstellungsverfahren (56) zum Herstellen von aus Rezepturen für Salben, halbfeste Zubereitungen, Augentropfen, Tabletten, Kapseln oder Tees ausgebildeten pharmazeutischen Individualrezepturen, in Mengen bis zu 5kg, unter Verwendung einer Apothekenrezepturherstellungs-Mischeinrichtung (14), die als Misch- und Rühreinheit (60) ausgebildet ist, die eine Halteeinrichtung (66) für ein Gefäß mit einem Innenvolumen von 10ml bis 5000ml, eine Hubeinheit (68), einen Rührstab (62) und einen Elektromotor zum rotierenden Antreiben des Rührstabs (62) aufweist, wobei an dem Rührstab (62) ein Rührwerkzeug (64) angebracht oder anbringbar ist, aufweisend die folgenden Schritte:
Einlesen von Individualrezeptdaten eines Individualrezepts (98);
Ermitteln, unter Zugriff auf eine Herstellungs-Datenbank (18) der zu der Herstellung des Individualrezepts erforderlichen Rohstoffe und deren Mengen sowie der Zeitdauer, der Verarbeitungsgeräte und der Vorgangs-Parameter des Mischvorgangs (100), wobei die Herstellungs-Datenbank Zusammensetzungs-Informationen, die einer Vielzahl von Individualrezepturen die jeweils enthaltenen Rohstoffe sowie deren Mengenverhältnisse zuordnet, sowie Herstellungsinformationen aufweist, die für jede enthaltene Individualrezeptur Herstellungs-Informationen, wie Verarbeitungsgeräte, Zeitdauer und Vorgangs-Parameter der zu mischenden Rohstoffe beinhalten;
Ermitteln, unter Zugriff auf einen apothekenbezogenen Bestands-Datenbankbereich (6) durch einen Vergleich der zur Herstellung erforderlichen Rohstoffe und deren Mengen mit den verfügbaren Rohstoffen (102), ob das Individualrezept herstellbar ist (104), wobei der apothekenbezogene Bestands-Datenbankbereich Rohstoffidentifikations-Parameter der in der Apotheke verfügbaren pharmazeutischen Rohstoffe (36), sowie für wenigstens einen Rohstoffidentifikations-Parameter einen zugeordneten Rohstoffmengen-Parameter, sowie die Verarbeitungsgerätidentifikations-Parameter der in der Apotheke verfügbaren Verarbeitungsgeräte aufweist;
Ausgeben, wenn das Individualrezept herstellbar ist (106), von Verarbeitungshinweisen zur Herstellung der Individualrezeptur an einen Benutzer, die Informationen über die erforderlichen Rohstoffe, deren Mengen, die erforderlichen Verarbeitungsgeräte, sowie die Zeitdauer und die Vorgangs-Parameter des Mischvorgangs beinhalten; und
Abwiegen der Mengen der für das eingelesene Individualrezept erforderlichen Rohstoffe und Mischen derselben zu dem Individualrezept (108).

2. Apotheken-Rezepturherstellungsverfahren (56) nach Anspruch 1, weiterhin aufweisend den Schritt des Ausgebens einer entsprechenden Nachricht an einen Benutzer oder Versenden einer elektronischen Bestellnachricht, in dem Fall, dass die Ermittlung ergibt, dass ein erforderlicher Rohstoff nicht mehr vorhanden oder nicht mehr in genügender Menge vorhanden ist (110).

3. Apotheken-Rezepturherstellungsverfahren (56) nach Anspruch 1 oder 2, wobei der apothekenbezogene Bestands-Datenbankbereich (6) weiterhin für wenigstens einen Rohstoffidentifikations-Parameter ein zugeordnetes Rohstoff-herstellungsdatum aufweist, und wobei die Zusammensetzungs-Informationen der Herstellungs-Datenbank (18) für wenigstens einen Rohstoff eine zugeordnete Haltbarkeitsdauer aufweist, weiterhin aufweisend den Schritt des Ermittelns, aus einem Vergleich der Haltbarkeitsdauer und dem Rohstoffherstellungsdatum plus aktuellem Datum für einen Rohstoff des Individualrezepts, ob dieser Rohstoff noch verwendbar und die Individualrezeptur herstellbar ist

4. Apotheken-Rezepturherstellungsverfahren (56) nach einem der Ansprüche 1 bis 3, weiterhin aufweisend den Schritt des Ausgebens einer entsprechenden Nachricht an einen Benutzer oder des Versendens einer elektronischen Nachricht, in dem Fall, dass die Ermittlung ergibt, dass ein erforderlicher Rohstoff nicht mehr verwendbar ist.

5. Apotheken-Rezepturherstellungsverfahren (56) nach einem der Ansprüche 1 bis 4, wobei die Herstellungs-Datenbank (18) weiterhin Plausibilitätsprüfungsinformationen aufweist, insbesondere Kombinationen von miteinander unverträglichen Rohstoffen oder für eine bestimmte Person oder Indikation ungeeignete Rohstoffe, weiterhin aufweisend den Schritt des Durchführens einer Plausibilitätsprüfung (118), bei der die ermittelten, zur Herstellung erforderlichen Rohstoffe und deren Mengen mit wenigstens einem Teil der Plausibilitätsprüfungsinformationen vergleichbar sind.

6. Apotheken-Rezepturherstellungssystem (2) zum Herstellen von pharmazeutischen Individualrezepturen nach einem der vorhergehenden Ansprüche, aufweisend:
eine Einleseeinrichtung (8) zum Einlesen von Individualrezeptdaten eines Individualrezepts;
eine Wägeeinrichtung (12) zum Abwiegen der Mengen der für ein eingelesenes Individualrezept erforderlichen Rohstoffe;
eine Mischeinrichtung (14), die eine Halteeinrichtung (66) für ein Gefäß mit einem Innenvolumen von 10ml bis 5000ml, eine Hubeinheit (68), einen Rührstab (62) und einen Elektromotor zum rotierenden Antreiben des Rührstabs (62) aufweist, wobei an dem Rührstab (62) ein Rührwerkzeug (64) angebracht oder anbringbar ist;
eine Anzeigeeinrichtung (10);
einen apothekenbezogenen Bestands-Datenbankbereich (6), der Rohstoffidentifikations-Parameter der in der Apotheke verfügbaren pharmazeutischen Rohstoffe (36), sowie für wenigstens einen Rohstoffidentifikations-Parameter einen zugeordneten Rohstoffmengen-Parameter aufweist, und der Verarbeitungsgerätidentifikations-Parameter der in der Apotheke verfügbaren Verarbeitungsgeräte (44, 46) aufweist;
eine Herstellungs-Datenbank (18), die Zusammensetzungsinformationen (48), die einer Vielzahl von Individualrezepturen die jeweils enthaltenen Rohstoffe sowie deren Mengenverhältnisse zuordnet, sowie Herstellungsinformationen aufweist, die für jede enthaltene Individualrezeptur Herstellungsinformationen, wie Verarbeitungsgeräte, Zeitdauer und Vorgangs-Parameter der zu mischenden Rohstoffe beinhalten; und
eine Datenverarbeitungseinheit (4), die so ausgebildet ist,
dass sie Zugriff auf Daten des apothekenbezogenen Bestands-Datenbankbereichs (6) hat;
dass sie Zugriff auf Daten der Herstellungs-Datenbank (18) hat; und
dass für die eingelesenen Individualrezeptdaten eines Individualrezepts unter Zugriff auf die Herstellungs-Datenbank (18) die zu der Herstellung des Individualrezepts erforderlichen Rohstoffe (36) und deren Mengen sowie die Zeitdauer, die Verarbeitungsgeräte und die Vorgangs-Parameter des Mischvorgangs ermittelbar sind;
dass unter Zugriff auf den apothekenbezogenen Bestands-Datenbankbereich (6) durch einen Vergleich der zur Herstellung erforderlichen Rohstoffe und deren Mengen mit den verfügbaren Rohstoffen (36) ermittelbar ist, ob das Individualrezept herstellbar ist, und
dass, wenn das Individualrezept herstellbar ist, Verarbeitungshinweise zur Herstellung der Individualrezeptur an einen Benutzer ausgebbar sind, die Informationen über die erforderlichen Rohstoffe (36), deren Mengen, die erforderlichen Verarbeitungsgeräte (44, 46), sowie die Zeitdauer und die Vorgangs-Parameter des Mischvorgangs beinhalten.

7. Apotheken-Rezepturherstellungssystem (2) nach Anspruch 6, wobei die Datenverarbeitungseinheit (4) weiterhin so ausgebildet ist, dass sie in dem Fall, dass die Ermittlung ergibt, dass ein erforderlicher Rohstoff (36) nicht mehr vorhanden oder nicht mehr in genügender Menge vorhanden ist, eine entsprechende Nachricht an einen Benutzer ausgebbar ist oder eine elektronische Bestellnachricht versendbar ist.

8. Apotheken-Rezepturherstellungssystem (2) nach Anspruch 6 oder 7, wobei der apothekenbezogene Bestands-Datenbankbereich (6) weiterhin für wenigstens einen Rohstoffidentifikations-Parameter einen zugeordneten Rohstoffhaltbarkeits-Parameter aufweist.

9. Apotheken-Rezepturherstellungssystem (2) nach Anspruch 6 oder 7, wobei der apothekenbezogene Bestands-Datenbankbereich (6) weiterhin für wenigstens einen Rohstoffidentifikations-Parameter ein zugeordnetes Rohstoffherstellungsdatum aufweist, und wobei die Zusammensetzungs-Informationen der Herstellungs-Datenbank (18) für wenigstens einen Rohstoff eine zugeordnete Haltbarkeitsdauer aufweist, und wobei die Datenverarbeitungseinheit (4) weiterhin so ausgebildet ist, dass aus einem Vergleich der Haltbarkeitsdauer und dem Rohstoffherstellungsdatum plus aktuellem Datum für einen Rohstoff (36) des Individualrezepts ermittelbar ist, ob dieser Rohstoff (36) noch verwendbar und die Individualrezeptur herstellbar ist.

10. Apotheken-Rezepturherstellungssystem (2) nach Anspruch 9, wobei die Datenverarbeitungseinheit (4) weiterhin so ausgebildet ist, dass sie in dem Fall, dass die Ermittlung ergibt, dass ein erforderlicher Rohstoff (36) nicht mehr verwendbar ist, eine entsprechende Nachricht an einen Benutzer ausgebbar ist oder eine elektronische Bestellnachricht versendbar ist.

11. Apotheken-Rezepturherstellungssystem (2) nach einem der Ansprüche 6 bis 10, wobei die Herstellungs-Datenbank (18) weiterhin Plausibilitätsprüfungsinformationen aufweist, insbesondere Kombinationen von miteinander unverträglichen Rohstoffen oder für eine bestimmte Person oder Indikation ungeeigneter Rohstoffe, und wobei die Datenverarbeitungseinheit (4) weiterhin so ausgebildet ist, dass eine Plausibilitätsprüfung durchführbar ist, bei der die ermittelten, zur Herstellung erforderlichen Rohstoffe (36) und deren Mengen mit wenigstens einem Teil der Plausibilitätsprüfungsinformationen vergleichbar sind.

12. Apotheken-Rezepturherstellungssystem (2) nach einem der Ansprüche 6 bis 11, wobei weiterhin eine Beschriftungseinheit (16), insbesondere ein Etikettendrucker, vorgesehen ist, die/der so ausgebildet ist, dass Informationen über die hergestellte Individualrezeptur ausdruckbar sind.

13. Apotheken-Rezepturherstellungssystem (2) nach einem der Ansprüche 6 bis 12, wobei der apothekenbezogene Bestands-Datenbankbereich (6) Teil einer apothekeninternen Bestands-Datenbank ist oder eine apothekeninterne Bestands-Datenbank (6) bildet, und/oder wobei die apothekeninterne Bestands-Datenbank (6) auf einem apothekeninternen Computer gespeichert ist, insbesondere auf dem Computer, der auch die Datenverarbeitungseinheit (4) beinhaltet; und/oder
wobei der apothekenbezogene Bestands-Datenbankbereich (6) Teil der Herstellungs-Datenbank (18) ist.

14. Apotheken-Rezepturherstellungssystem (2) nach einem der Ansprüche 6 bis 13, wobei die Herstellungs-Datenbank (18) auf einem Server, insbesondere auf einem entfernt von dem apothekenbezogenen Computer angeordneten Server, gespeichert ist, auf den die Datenverarbeitungseinheit (4) über eine Datenverbindung zugreift.

15. Anordnung von mehreren Apotheken-Rezepturherstellungssystemen (2) nach einem der Ansprüche 6 bis 14, wobei die Apotheken-Rezepturherstellungssysteme (2), mit Ausnahme der Herstellungs-Datenbank (18), separat voneinander vorliegen und ihre Datenverarbeitungseinheiten (4) so ausgebildet sind, dass sie Zugriff auf Daten einer gemeinsamen Herstellungs-Datenbank (18) haben, die Zusammensetzungs-Informationen, die einer Vielzahl von Individualrezepturen die jeweils enthaltenen Rohstoffe sowie deren Mengenverhältnisse zuordnet, sowie Herstellungsinformationen aufweist, die für jede enthaltene Individualrezeptur Herstellungs-Informationen über Verarbeitungsgeräte, Zeitdauer und Vorgangs-Parameter der zu mischenden Rohstoffe beinhaltet.

## Claims

1. Pharmacy formulation preparation method (56) for preparing individual pharmaceutical formulations formed as formulations for ointments, semisolid preparations, eye drops, pills, capsules or teas in quantities of up to 5 kg, using a . pharmacy formulation preparation mixing means (14) formed as a mixing and stirring unit (60) comprising fastening means (66) for a container having an inner volume of 10 ml to 5000 ml, a lifting unit (68), a stirring stick (62) and an electric motor for driving the stirring stick (62) in a rotating manner, the stirring stick (62) having a stirring instrument (64) attached or attachable thereto, comprising the following steps:
reading in the individual prescription data of an individual prescription (98);
determining, by accessing a preparation database (18), the raw materials required for preparing the individual prescription and the respective quantities thereof as well as the time period, the processing devices and the procedure parameters of the mixing procedure (100), wherein the preparation database comprises composition information, which allocates the respectively contained raw materials as well as the proportions thereof to a plurality of individual formulations, as well as preparation information, which comprises, for each contained individual formulation, preparation information such as processing devices, time period and procedure parameters of the raw materials to be mixed;
determining, by accessing a pharmacy-associated stock database area (6), by comparing the raw materials required for the preparation and the respective quantities thereof to the available raw materials (102), whether the individual prescription can be prepared (104), wherein the pharmacy-associated stock database area comprises raw material identification parameters of the pharmaceutical raw materials (36) available in the pharmacy and, for at least one raw material identification parameter, an associated raw material quantity parameter as well as the processing devices identification parameters of the processing devices available in the pharmacy;
outputting, if the individual prescription can be prepared (106), processing instructions for preparing the individual formulations, containing information about the required raw materials, the respective quantities thereof, the required processing devices as well as the time period and the procedure parameters of the mixing procedure, to a user; and
weighing the quantities of the raw materials required for the read-in individual prescription and mixing them to render the individual prescription (108).

2. Pharmacy formulation preparation method (56) according to claim 1, further comprising the step of outputting a respective message to a user or sending an electronic order notification if a required raw material is found to be no longer present or no longer present to a sufficient extent (110).

3. Pharmacy formulation preparation method (56) according to claim 1 or 2, wherein the pharmacy-associated stock database area (6) further comprises for at least one raw material identification parameter, an associated raw material preparation date and wherein the composition information of the preparation database (18) comprises, for at least one raw material, an associated shelf-life, further comprising the step of determining, by comparing the shelf-life to the raw material preparation date plus the current date for a raw material of the individual prescription, whether this raw material can still be used and whether the individual formulation can be prepared.

4. Pharmacy formulation preparation method (56) according to any of claims 1 to 3, further comprising the step of outputting, if a required raw material is found not to be usable anymore, a respective message to a user or sending an electronic message.

5. Pharmacy formulation preparation method (56) according to any of claims 1 to 4, wherein the preparation database (18) further comprises plausibility check information, in particular combinations of incompatible raw materials or raw materials incompatible with a certain person or indication, further comprising the step of performing a plausibility check (118), in which the raw materials determined as required for the preparation and the respective quantities thereof can be compared to at least part of the plausibility check information.

6. Pharmacy formulation preparation system (2) for preparing pharmaceutical individual formulations according to any of the preceding claims, comprising:
reading means (8) for reading in the individual prescription data of an individual prescription;
weighing means (12) for weighing the quantities of the raw materials required for a read-in individual prescription;
mixing means (14) comprising fastening means (66) for a container having an inner volume of 10 ml to 5000 ml, a lifting unit (68), a stirring stick (62) and an electric motor for driving the stirring stick (62) in a rotating manner, the stirring stick (62) having a stirring instrument (64) attached or attachable thereto;
display means (10);
a pharmacy-associated stock database area (6) comprising raw material identification parameters of the pharmaceutical raw materials (36) available in the pharmacy as well as for at least one raw material identification parameter, an associated raw material quantity parameter and comprising processing device identification parameters of the processing devices (44, 46) available in the pharmacy;
a preparation database (18) comprising composition information (48), which allocates the respectively contained raw materials and the respective proportions thereof to a plurality of individual formulations, as well as preparation information, which comprises, for each contained individual formulation, preparation information such as processing devices, time period and procedure parameters of the raw materials to be mixed; and
a data processing unit (4), which is adapted:
to have access to data in the pharmacy-associated stock database area (6);
to have access to data in the preparation database (18); and
such that, by accessing the preparation database (18), the raw materials (36) required for preparing the individual prescription and the respective quantities thereof as well as the time period, the processing devices and the procedure parameters of the mixing procedure can be determined for the read-in individual prescription data of the individual prescription;
that, by accessing the pharmacy-associated stock database area (6), by comparing the raw materials required for the preparation and the respective quantities thereof to the available raw materials (36), it can be determined whether the individual prescription can be prepared; and
that, if the individual prescription can be prepared, processing instructions for preparing the individual formulation, containing the information about the required raw materials (36), the respective quantities thereof, the required processing devices (44, 46) as well as the time period and the procedure parameters of the mixing procedure, can be output to a user.

7. Pharmacy formulation preparation system (2) according to claim 6, wherein the data processing unit (4) is further adapted such that, if a required raw material (36) is found to be no longer present or no longer present to a sufficient extent, a respective message can be output to a user or an electronic order message can be sent.

8. Pharmacy formulation preparation system (2) according to claim 6 or 7, wherein the pharmacy-associated stock database area (6) further comprises, for at least one raw material identification parameter, one associated raw material shelf-life parameter.

9. Pharmacy formulation preparation system (2) according to claim 6 or 7, wherein the pharmacy-associated stock database area (6) further comprises, for at least one raw material identification parameter, an allocated raw material preparation date and wherein the composition information of the preparation database (18) comprises, for at least one raw material, an allocated shelf-life, and wherein the data processing means (4) is further adapted such that by comparing the shelf-life to the raw material preparation date plus the current date for a raw material (36) of the individual prescription, it can be determined whether this raw material (36) can still be used and whether the individual formulation can be prepared.

10. Pharmacy prescription preparation system (2) according to claim 9, wherein the data processing unit (4) is further adapted such that, if a required raw material (36) is found not to be usable anymore, a respective message can be output to a user or an electronic order message can be sent.

11. Pharmacy formulation preparation system (2) according to any of claims 6 to 10, wherein the preparation database (18) further comprises plausibility check information, in particular combinations of incompatible raw materials or raw materials incompatible with a certain person or indication, and wherein the data processing unit (4) is further adapted such that a plausibility check can be performed, in which the raw materials (36) determined as required for the preparation and the respective quantities thereof can be compared to at least part of the plausibility check information.

12. Pharmacy formulation preparation system (2) according to any of claims 6 to 11, wherein a labeling means (16), in particular a label printer, is further provided, which is adapted such that information about the prepared individual formulation can be printed.

13. Pharmacy formulation preparation system (2) according to any of claims 6 to 12, wherein the pharmacy-associated stock database area (6) may be part of a pharmacy-internal stock database or forms a pharmacy-internal stock database (6) and/or wherein the pharmacy-internal stock database (6) may be stored on a pharmacy-internal computer, especially on the computer that also contains the data processing unit (4); and/or wherein the pharmacy-associated stock database area (6) is part of the preparation database (18).

14. Pharmacy formulation preparation system (2) according to any of claims 6 to 13, wherein the preparation database (18) is stored on a server, in particular on a server located remotely from the pharmacy-associated computer, wherein the data processing unit (4) accesses the server via a data connection.

15. Arrangement of a plurality of pharmacy formulation preparation systems (2) to any of claims 6 to 14, wherein the pharmacy formulation preparation systems (2), except for the preparation database (18), are provided separately from each other and wherein their data processing units (4) are adapted to have access to data on a common preparation database (18) comprising composition information, which allocates the respectively contained raw materials and the proportions thereof to a plurality of individual formulations, as well as preparation information, which comprises, for each contained individual formulation, preparation information about the processing devices, time period and procedure parameters of the raw materials to be mixed.

## Revendications

1. Procédé de fabrication de formules pharmaceutiques (56) destiné à la fabrication de formules pharmaceutiques individuelles réalisées à partir de formules pour onguents, préparations semi-solides, gouttes oculaires, collyres, comprimés, capsules ou décoctions, en quantités allant jusqu'à 5 kg, en utilisant un dispositif de mélange pour fabrication de formules pharmaceutiques (14) qui est réalisé sous forme d'unité de mélange et d'agitation (60), qui comporte un dispositif de maintien (66) pour un récipient ayant un volume interne compris entre 10ml et 5000ml, une unité de levage (68), une tige d'agitation (62) et un moteur électrique pour l'entraînement rotatif de la tige d'agitation (62), cependant que, à la tige d'agitation (62), un outil d'agitation (64) est ou peut être agencé, comprenant les étapes suivantes :
lecture de données d'ordonnance individuelle d'une ordonnance individuelle (98) ;
détermination, en ayant accès à une banque de données de fabrication (18), des matières premières nécessaires à la fabrication de l'ordonnance individuelle et de leurs quantités ainsi que de la durée, des appareils de traitement et des paramètres de processus du processus de mélange (100), cependant que la banque de données de fabrication comporte des informations de composition associant à une pluralité de formules individuelles les matières premières respectivement contenues ainsi que leurs proportions, ainsi que des informations de fabrication qui, pour chaque formule individuelle comprise, contiennent des informations de fabrication telles qu'appareils de traitement, durée et paramètres de processus des matières premières à mélanger ;
détermination, en ayant accès à une zone de banque de données de stock de pharmacie (6), par une comparaison des matières premières nécessaires à la fabrication et de leurs quantités avec les matières premières disponibles (102), si l'ordonnance individuelle peut être fabriquée (104), cependant que la zone de banque de données de stock de pharmacie comporte des paramètres d'identification de matières premières des matières premières (36) pharmaceutiques disponibles dans la pharmacie, ainsi que, pour au moins un paramètre d'identification de matière première, un paramètre associé de quantité de matière première, ainsi que les paramètres d'identification d'appareils de traitement des appareils de traitement disponibles dans la pharmacie ;
délivrance, quand l'ordonnance individuelle peut être fabriquée (106), d'indications de traitement pour la fabrication de la formule individuelle à un utilisateur, lesquelles contiennent des informations sur les matières premières nécessaires, sur leurs quantités, sur les appareils de traitement nécessaires, ainsi que sur la durée et sur les paramètres de processus du processus de mélange ; et
pesage des quantités des matières premières nécessaires pour l'ordonnance individuelle lue, et mélange de ces dernières pour correspondre à l'ordonnance individuelle (108).

2. Procédé de fabrication de formules pharmaceutiques (56) selon la revendication 1, comportant en outre l'étape de la délivrance d'un message correspondant à un utilisateur, ou envoi d'un message électronique de commande dans le cas où il résulte de la détermination qu'une matière première nécessaire n'est plus en stock ou n'est plus en quantité suffisante (110).

3. Procédé de fabrication de formules pharmaceutiques (56) selon la revendication 1 ou 2, cependant que la zone de banque de données de stock de pharmacie (6) comporte en outre pour au moins un paramètre d'identification de matière première une date associée de fabrication de matière première, et cependant que les informations de composition de la banque de données de fabrication (18) comportent pour au moins une matière première une durée associée de conservation, comportant en outre l'étape de la détermination, à partir d'une comparaison de la durée de conservation avec la date de fabrication de matière première plus la date actuelle, pour une matière première de l'ordonnance individuelle, si cette matière première peut encore être utilisée et l'ordonnance individuelle fabriquée.

4. Procédé de fabrication de formules pharmaceutiques (56) selon une des revendications de 1 à 3, comportant en outre l'étape de la délivrance d'un message correspondant à un utilisateur, ou de l'envoi d'un message électronique dans le cas où il résulte de la détermination qu'une matière première nécessaire n'est plus utilisable.

5. Procédé de fabrication de formules pharmaceutiques (56) selon une des revendications de 1 à 4, cependant que la banque de données de fabrication (18) comporte
en outre des informations de vérification de plausibilité, en particulier des combinaisons de matières premières incompatibles entre elles ou des matières premières inappropriées à une personne ou à une indication précise, comportant en outre l'étape de l'exécution d'une vérification de plausibilité (118) lors de laquelle les matières premières déterminées nécessaires à la fabrication et leurs quantités sont similaires à au moins une partie des informations de vérification de plausibilité.

6. Système de fabrication de formules pharmaceutiques (2) destiné à la fabrication de formules pharmaceutiques individuelles selon une des revendications précédentes, comportant :
un dispositif de lecture (8) pour la lecture de données d'ordonnance individuelle d'une ordonnance individuelle ;
un dispositif de pesage (12) pour le pesage des quantités des matières premières nécessaires pour une ordonnance individuelle lue ;
un dispositif de mélange (14) qui comporte un dispositif de maintien (66) pour un récipient ayant un volume interne compris entre 10ml et 5000ml, une unité de levage (68), une tige d'agitation (62) et un moteur électrique pour l'entraînement rotatif de la tige d'agitation (62), cependant que, à la tige d'agitation (62), un outil d'agitation (64) est ou peut être agencé :
un dispositif d'affichage (10) ;
une zone de banque de données de stock de pharmacie (6) qui comporte des paramètres d'identification de matières premières des matières premières (36) pharmaceutiques disponibles dans la pharmacie, ainsi que, pour au moins un paramètre d'identification de matière première, un paramètre associé de quantité de matière première, et qui comporte des paramètres d'identification d'appareils de traitement des appareils de traitement (44, 46) disponibles dans la pharmacie ;
une banque de données de fabrication (18) qui comporte des informations de composition (48) associant à une pluralité de formules individuelles les matières premières respectivement contenues ainsi que leurs proportions, ainsi que des informations de fabrication qui, pour chaque formule individuelle comprise, contiennent des informations de fabrication telles qu'appareils de traitement, durée et paramètres de processus des matières premières à mélanger ; et
une unité de traitement de données (4) conçue de telle façon
qu'elle a accès à des données de la zone de banque de données de stock de pharmacie (6) ;
qu'elle a accès à des données de la zone de banque de données de fabrication (18) ; et
que, pour les données d'ordonnance individuelle lues d'une ordonnance individuelle, en ayant accès à la banque de données de fabrication (18), les matières premières (36) nécessaires à la fabrication de l'ordonnance individuelle et leurs quantités ainsi que la durée, les appareils de traitement et les paramètres de processus du processus de mélange peuvent être déterminés ;
que, en ayant accès à la zone de banque de données de stock de pharmacie,
par une comparaison des matières premières nécessaires à la fabrication et de leurs quantités avec les matières premières disponibles (36), il peut être déterminé si l'ordonnance individuelle peut être fabriquée, et
que, quand l'ordonnance individuelle peut être fabriquée, des indications de traitement pour la fabrication de la formule individuelle peuvent être délivrées à un utilisateur, lesquelles contiennent des informations sur les matières premières (36) nécessaires, sur leurs quantités, sur les appareils de traitement (44, 46) nécessaires, ainsi que sur la durée et sur les paramètres de processus du processus de mélange.

7. Système de fabrication de formules pharmaceutiques (2) selon la revendication 6, cependant que l'unité de traitement de données (4) est en outre conçue de telle façon que, dans le cas où il résulte de la détermination qu'une matière première nécessaire (36) n'est plus en stock ou n'est plus en quantité suffisante, un message correspondant peut être délivré à un utilisateur, ou un message électronique de commande peut être envoyé.

8. Système de fabrication de formules pharmaceutiques (2) selon la revendication 6 ou 7, cependant que la zone de banque de données de stock de pharmacie (6) comporte en outre pour au moins un paramètre d'identification de matière première un paramètre associé de conservation de matière première.

9. Système de fabrication de formules pharmaceutiques (2) selon la revendication 6 ou 7, cependant que la zone de banque de données de stock de pharmacie (6) comporte en outre pour au moins un paramètre d'identification de matière première une date associée de fabrication de matière première, et cependant que les informations de composition de la banque de données de fabrication (18) comportent pour au moins une matière première une date associée de conservation, et cependant que l'unité de traitement de données (4) est en outre conçue de telle façon que, à partir d'une comparaison de la durée de conservation avec la date de fabrication de matière première plus la date actuelle, pour une matière première (36) de l'ordonnance individuelle, il peut être déterminé si cette matière première (36) peut encore être utilisée et l'ordonnance individuelle fabriquée.

10. Système de fabrication de formules pharmaceutiques (2) selon la revendication 9, cependant que l'unité de traitement de données (4) est en outre conçue de telle façon que, dans le cas où il résulte de la détermination qu'une matière première (36) nécessaire n'est plus utilisable, un message correspondant peut être délivré à un utilisateur, ou un message électronique de commande peut être envoyé.

11. Système de fabrication de formules pharmaceutiques (2) selon une des revendications de 6 à 10, cependant que la banque de données de fabrication (18) comporte en outre des informations de vérification de plausibilité, en particulier des combinaisons de matières premières incompatibles entre elles ou des matières premières inappropriées à une personne ou à une indication précise, et cependant que l'unité de traitement de données (4) est en outre conçue de telle façon qu'une vérification de plausibilité peut être exécutée, lors de laquelle les matières premières (36) déterminées nécessaires à la fabrication et leurs quantités sont similaires à au moins une partie des informations de vérification de plausibilité.

12. Système de fabrication de formules pharmaceutiques (2) selon une des revendications de 6 à 11, cependant que, en outre, une unité d'inscription (16), en particulier une imprimante pour étiquettes, est prévue, laquelle est conçue pour que des informations sur la formule individuelle fabriquée puissent être imprimées.

13. Système de fabrication de formules pharmaceutiques (2) selon une des revendications de 6 à 12, cependant que la zone de banque de données de stock de pharmacie (6) fait partie d'une banque de données de stock interne à une pharmacie ou constitue une banque de données de stock (6) interne à une pharmacie, et/ou cependant que la banque de données de stock (6) interne à une pharmacie est mémorisée sur un ordinateur interne à une pharmacie, en particulier sur l'ordinateur qui contient aussi l'unité de traitement de données (4) ; et/ou
cependant que la zone de banque de données de stock de pharmacie (6) fait partie de la banque de données de fabrication (18).

14. Système de fabrication de formules pharmaceutiques (2) selon une des revendications de 6 à 13, cependant que la banque de données de fabrication (18) est mémorisée sur un serveur, en particulier sur un serveur agencé de manière éloignée de l'ordinateur relatif à la pharmacie, auquel l'unité de traitement de données (4) a accès par l'intermédiaire d'une liaison de données.

15. Agencement de plusieurs systèmes de fabrication de formules pharmaceutiques (2) selon une des revendications de 6 à 14, cependant que les systèmes de fabrication de formules pharmaceutiques (2), à l'exception de la banque de données de fabrication (18), sont séparés les uns des autres, et leurs unités de traitement de données (4) sont conçues de telle façon qu'elles ont accès à des données d'une banque de données de fabrication (18) commune qui comporte des informations de composition associant à une pluralité de formules individuelles les matières premières respectivement contenues ainsi que leurs proportions, ainsi que des informations de fabrication qui, pour chaque formule individuelle comprise, contiennent des informations de fabrication concernant des appareils de traitement, durée et paramètres de processus des matières premières à mélanger.
